(19) Europäisches Patentamt
European Patent Office
Office européen des brevets

(11) **EP 1 746 741 B1**

(12) **EUROPEAN PATENT SPECIFICATION**

(45) Date of publication and mention
of the grant of the patent:
**01.10.2008 Bulletin 2008/40**

(51) Int Cl.:
*H04B 7/08* *(2006.01)*     *H04B 7/06* *(2006.01)*

(21) Application number: **05256661.9**

(22) Date of filing: **27.10.2005**

(54) **Wireless communication device and method**

Verfahren und Vorrichtung zur drahtlosen Kommunikation

Procédé et dispositif pour communication sans fil

(84) Designated Contracting States:
**DE FR GB IT**

(30) Priority: **21.07.2005   JP 2005211822**

(43) Date of publication of application:
**24.01.2007   Bulletin 2007/04**

(73) Proprietor: **FUJITSU LIMITED**
**Kawasaki-shi,**
**Kanagawa 211-8588 (JP)**

(72) Inventor: **Sato, Tomonori**
**Kawasaki-shi**
**Kanagawa 211-8588 (JP)**

(74) Representative: **Hitching, Peter Matthew et al**
**Haseltine Lake**
**Lincoln House**
**300 High Holborn**
**London WC1V 7JH (GB)**

(56) References cited:
**EP-A- 1 069 708**          **EP-A- 1 361 678**
**EP-A- 1 361 679**          **WO-A-00/35129**
**US-A1- 2004 235 421**

**Description**

BACKGROUND OF THE INVENTION

1. Field of the invention

The present invention relates to a wireless communication device performing communications in a way that forms beams.

2. Description of the related art

At the present, in a digital wireless communication field, there are developed a variety of technologies enabling high-speed communications in a wide band by improving a communication quality.

One of these technologies is an adaptive array antenna technology. The adaptive array antenna technology is that an array antenna constructed of a plurality of antenna elements is used, and a signal transmitted and received by each antenna element is multiplied by a weighted coefficient corresponding to a propagation environment, thereby controlling directivity of the signal. With this contrivance, the adaptive array antenna technology enables interference waves to be suppressed and, more essentially, the communication quality to be improved.

In a conventional wireless communication system (which will hereinafter be referred to as a conventional system) employing this type of adaptive array antenna technology, in a base station, a beam arrival direction obtained on a link from a mobile station to the base station (which will hereinafter be termed an uplink) is determined as a direction of transmission of beam on a link from the base station to the mobile station (which will hereinafter be termed a downlink). The base station weights, by received signal power, each of arrival angles of the respective propagation paths (which will hereinafter be simply called paths) for incoming waves that are measured on the uplink, and obtains a beam arrival direction by averaging the weighted angles of arrival.

Further, according to a W-CDMA (Wideband Code Division Multiple Access) technology, in the mobile station, a SIR (Signal-to-Interference Ratio) is measured to ensure a required quality by the minimum transmission power required, and the transmission power of the base station is controlled so that the SIR value falls within a predetermined range.

Note that technologies disclosed in the following documents are given as the conventional arts related to the present invention of the application. The conventional art documents are "Japanese Patent Laid-Open Publication No. 2003-110476" and "Japanese Patent Laid-Open Publication No.2004-32656".

The following is a calculation formula for obtaining a direction of arrival in the conventional system. Note that an uplink beam means a beam transmitted via the uplink, and a downlink beam means a beam transmitted via the downlink. Further, in the following formula, $\theta(i)$ designates an uplink beam arrival direction from an (i)th path, P(i) represents reception power in the (i)th path, and N denotes the number of paths.

$$\text{Downlink Beam Transmission Direction} = \text{Uplink Beam Direction} = 1 \ / \ N \times \sum \theta(i) \times P(i) \quad \cdots \text{(Formula 1)}$$

A determining method of a beam transmission direction in the conventional system will be explained with reference to FIGS. 24, 25 and 26 by use of the (Formula 1). FIG. 24 is a diagram showing an example of a 3-path propagation model. FIG. 25 shows a delay profile per path in a base station 502 in that case. FIG. 26 is a diagram showing an example of how the beam direction is determined in the conventional system.

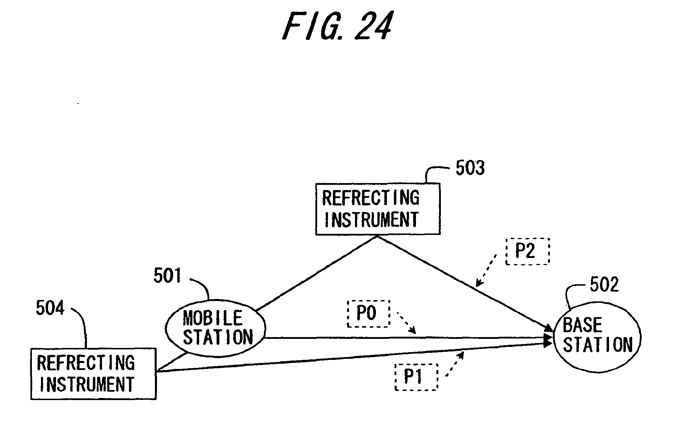

An assumption in the propagation model shown in FIG. 24 is a case in which signals transmitted from a mobile station 501 are propagated to a path P0, a path P1 and a path P2 and are received by the base station 502 at an equal power level.

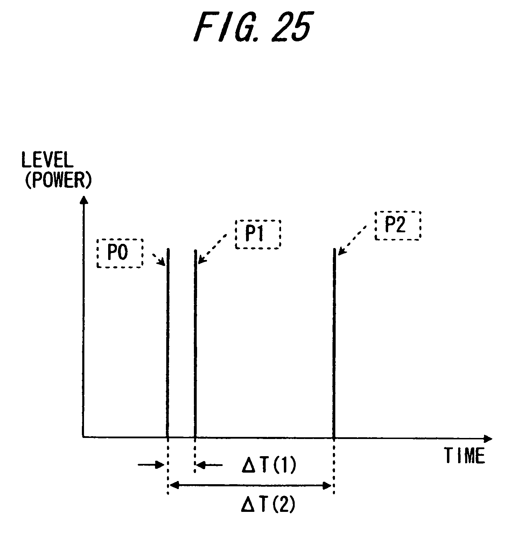

Further, the delay profile shown in FIG. 25 represents a relationship between receiving time and received signal power level in each of the paths (P0, P1 and P2). The signals propagated along the paths P1 and P2 are respectively reflected by intercepting objects 503, 504 and are therefore delayed in their arrival time as compared with the signal propagated along the path P0 (T(1), T(2)).

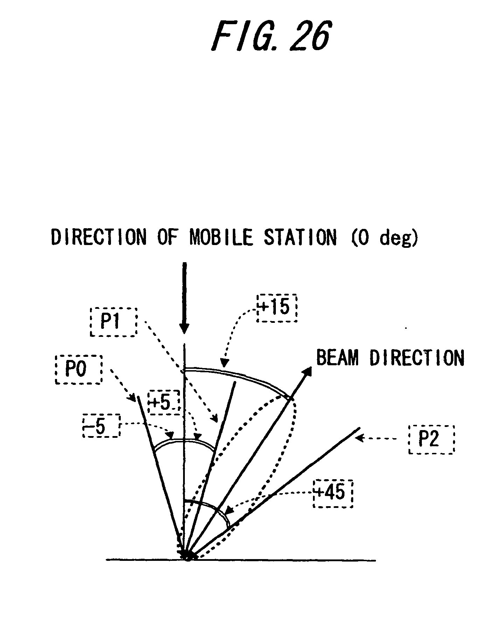

Then, in this type of propagation model, a direction of the mobile station 501 is set at 0 degree to the base station 502, and the arrival angles of the respective paths are set such as the path P0: -5 degrees, the path P1: +5 degrees and the path P2: +45 degrees, in which case the beam arrival direction in the conventional system is determined as shown in FIG. 26.

The signal arrival direction is, as the received signal power levels in the respective paths are equal to each other, an average of the arrival directions (= 1 / 3 × (- 5 + 5 + 45)) and is determined to be +15 degrees based on the (Formula 1). As a result, the base station forms a beam in a direction deviating at +15 degrees from an original direction (0 degree) toward the mobile station 501. Thus, a cause of the deviation in the beam direction is that a weight is applied in all the paths, and hence the direction of arrival (+45 degrees) of the path P2 is largely affected.

Thus, if the arrival angle spread is large, the conventional system has a problem that the beam direction obtained deviates, and a speech quality for a target mobile station deteriorates.

Further, in the W-CDMA (Wideband Code Division Multiple Access) system, the communication quality in the mobile station is maintained to some extent, however, a problem is that an increase in the transmission power causes interference noises to other mobile stations, and the communication quality of other mobile stations deteriorate.

## SUMMARY OF THE INVENTION

It is an object of the present invention to provide a wireless communication device that improves the communication quality by properly determining the beam transmitting direction.

The present invention adopts the following configurations in order to solve the problems given above. Namely, the present invention is a wireless communication device comprising antennas received signals transmitted from a terminal respectively through a plurality of paths, a detection unit detecting each of a received timing, arrival angle information and received signal power information of each of the received signals, a delay information calculation unit obtaining delay information from the fastest received timing among the detected reception timings or a start timing for a path search with respect to each of the signals, a weighted coefficient calculation unit calculating a weighted coefficient with respect to each of the signals based on the obtained delay information, and a determining unit determining a direction of the signal transmitted toward the terminal by using arrival angle information and the weighted coefficient.

According to the present invention, the direction of the transmitting signal to the terminal that has transmitted the received signals is determined based on the received timing, the arrival angle information and the received signal power information level with respect to each of received signals. In this determination, the delay information from the signal having the fastest received timing or the delay information from the start timing for the path search is obtained with respect to each of the signals, and the weighted coefficient determined based on this delay information is employed as a weight to the arrival angle information of each signal, thus determining the direction of the transmitting signal.

Hence, according to the present invention, the direction of the transmitting signal can be determined in a way that reduces an influence degree of the signal from a path with a large amount of delay time from the signal having the fastest received timing or a large amount of delay information from the start timing for the path search, whereby a proper transmitting signal direction can be determined and, more essentially, the communication quality with the mobile station can be improved.

Further, in the wireless communication device according to the present invention, the determining unit determines the direction of the signal transmitted toward the terminal by employing the weighted coefficient as a weight to the arrival angle information and to the received signal power information of each signal.

In the present invention, the delay information from the signal having the fastest received timing is obtained with respect to each of the signals, and the weighted coefficient determined based on this delay information is employed as the weight to the arrival angle and to the received signal power information of each signal, thus determining the direction of the transmitting signal.

Therefore, according to the present invention, even in the case of using the received signal power information of each signal, the direction of the transmitting signal can be determined in a way that reduces the influence degree of the signal from the paths with the large amount of delay time from the signal having the fastest received timing, whereby the proper transmitting signal direction can be determined.

Still further, the wireless communication device according to the present invention further comprises a spread calculation unit obtaining arrival angle spread information based on the arrival angle information, and a rate acquiring unit acquiring a rate coefficient between the received signal power information and the weighted coefficient based on the arrival angle spread information, wherein the determining unit determines the direction of the signal transmitted toward the terminal by use of the received signal power information and the weighted coefficient in accordance with the rate coefficient.

In the present invention, the arrival angle spread information is obtained from the arrival angle information of the respective signals received, and the rate coefficient corresponding to the influence degree between the received signal power information and the weighted coefficient in terms of determining the transmitting signal direction, is obtained from the above-obtained arrival angle spread information. Finally, the direction of the signal transmitted toward the terminal is determined by use of this rate coefficient.

Hence, according to the present invention, the transmitting signal direction can be determined so that, for example, delay information factor of each signal increases if the arrival angle spread is large, and that received signal power information factor of each signal increases if the arrival angle spread is small. Namely, the transmitting signal direction can be determined by more precise judgment and, more essentially, the communication quality with the terminal can be improved.

Yet further, the present invention is a wireless communication device comprising antennas receiving transmission signals from a terminal respectively through a plurality of paths, a detection unit detecting each of a received timing, arrival angle information and received signal power information of each of the received signals, a delay information calculation unit obtaining delay information of each signal by use of, as a reference timing, a received timing of the signal having the maximum received signal power among the detected received timings, a weighted coefficient calculation unit calculating a weighted coefficient with respect to each of the signals based on the delay information, and a determining unit determining a direction of the signal transmitted toward the terminal by using the weighted coefficient as a weight to the arrival angle information in each signal.

In the present invention, the delay information from the received timing of the signal having the maximum received signal power information among the received signals to the received timing of each of other signals is obtained. Moreover, the weighted coefficient is obtained with respect to each signal from the delay information, and the transmitting signal direction is determined by employing the weighted coefficient.

Hence, according to the present invention, the transmitting signal direction can be determined in a way that reduces the influence degree of the received signal having the small received signal power information.

It should be noted that the present invention may be a program actualizing any one of the functions given above. Further, the invention may also be a readable-by-computer storage medium stored with such a program.

According to the present invention, it is possible to actualize the wireless communication device that properly determines the beam transmitting direction and improves the communication quality.

BRIEF DESCRIPTION OF THE DRAWINGS

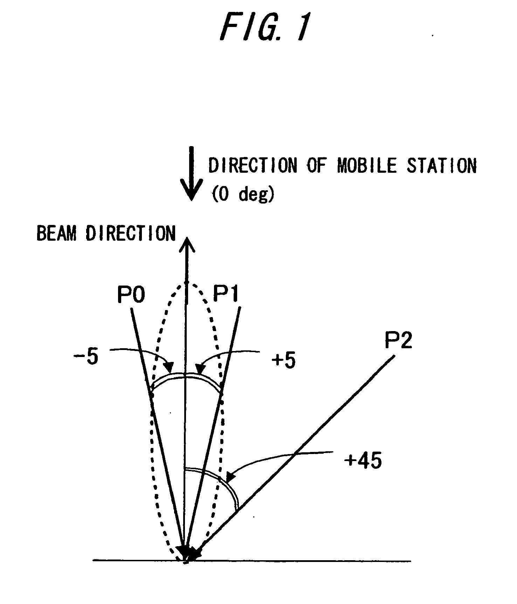

FIG. 1 is a diagram showing an example of calculating a beam direction in the embodiment;

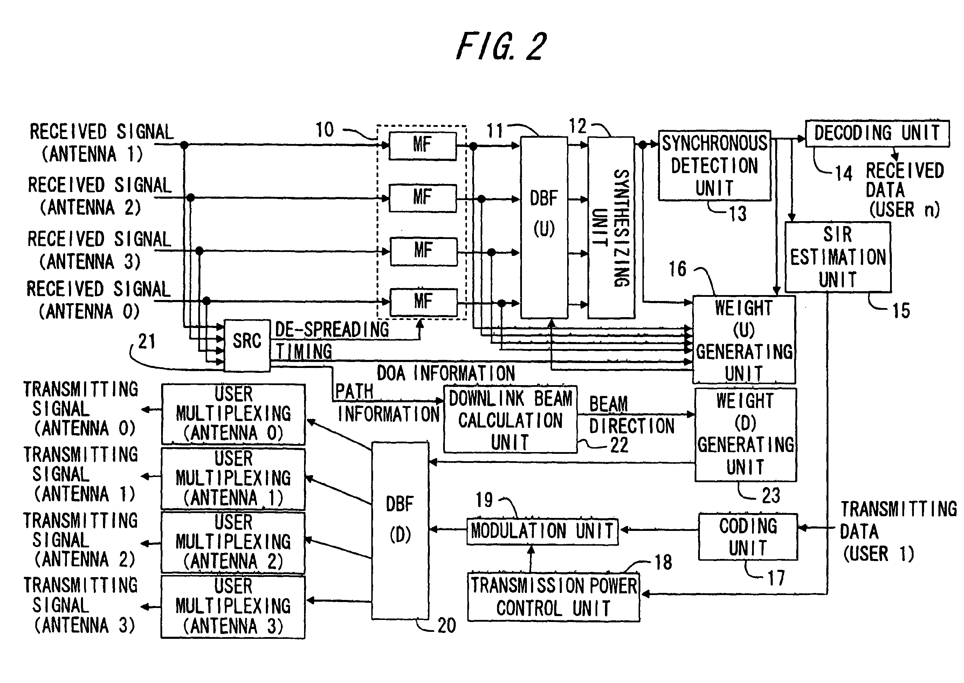

FIG. 2 is a diagram showing a system architecture in a first embodiment;

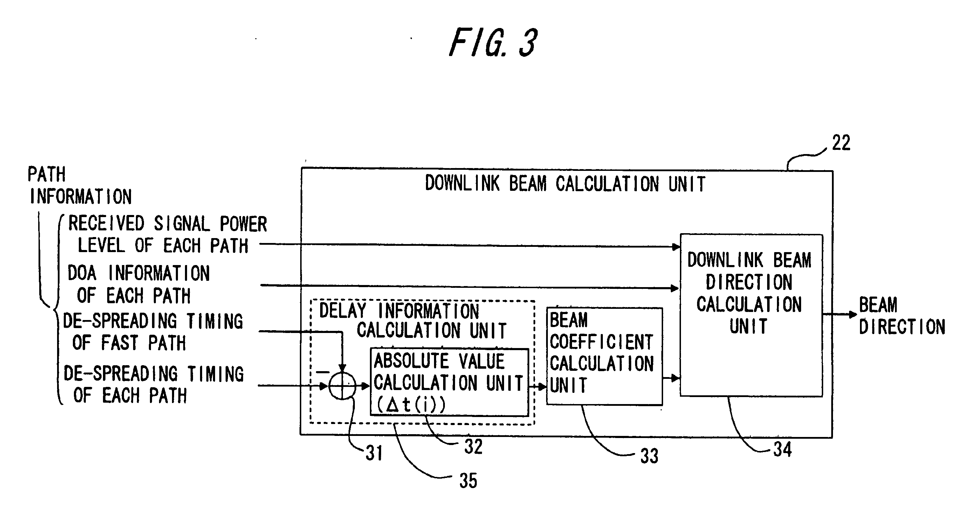

FIG. 3 is a diagram showing a functional configuration of a downlink beam calculation unit in the first embodiment;

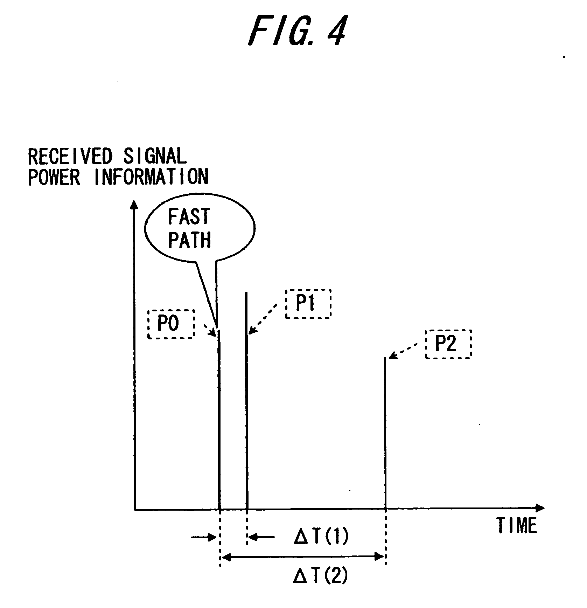

FIG. 4 is a diagram showing a delay profile in the first embodiment;

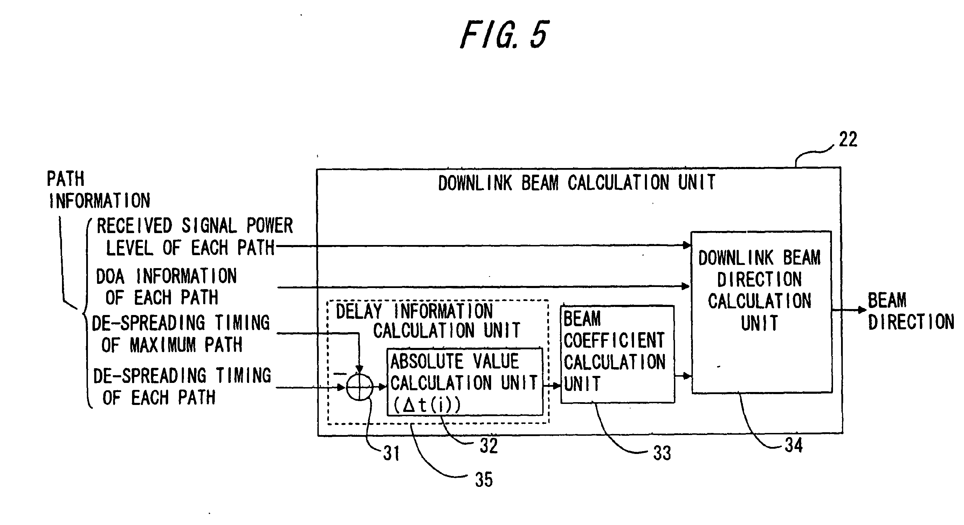

FIG. 5 is a diagram showing a functional configuration of the downlink beam calculation unit in a second embodiment;

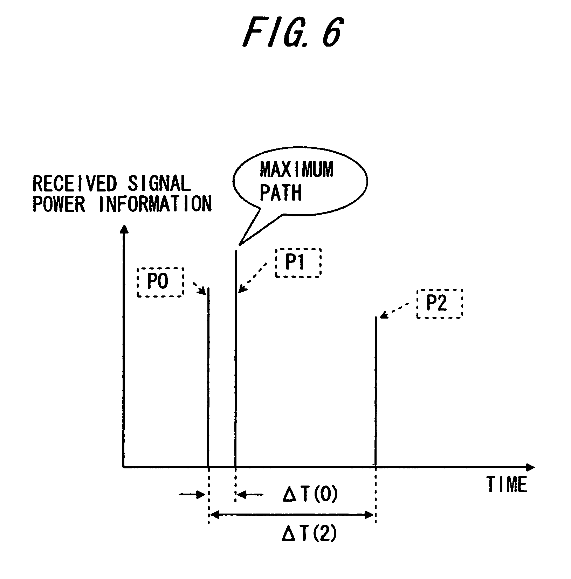

FIG. 6 is a diagram showing a delay profile in the second embodiment;

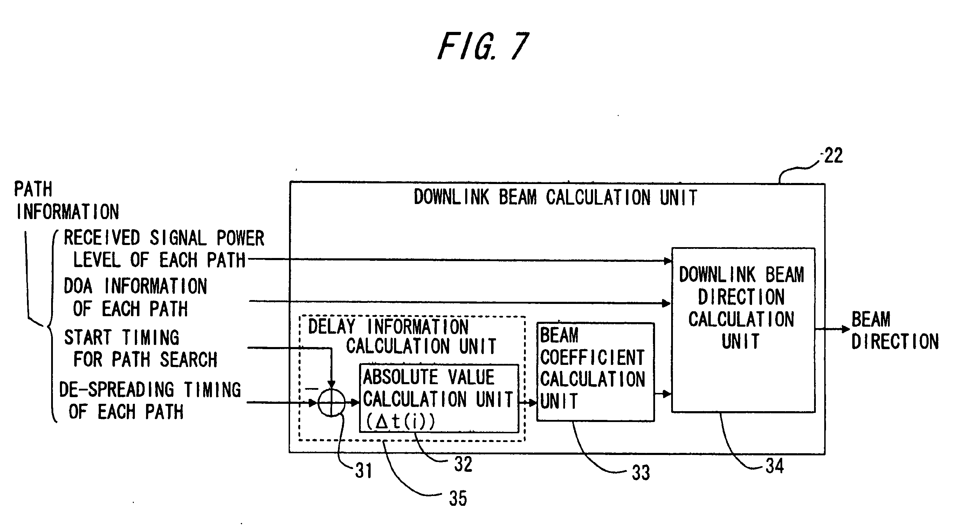

FIG. 7 is a diagram showing a functional configuration of the downlink beam calculation unit in a third embodiment;

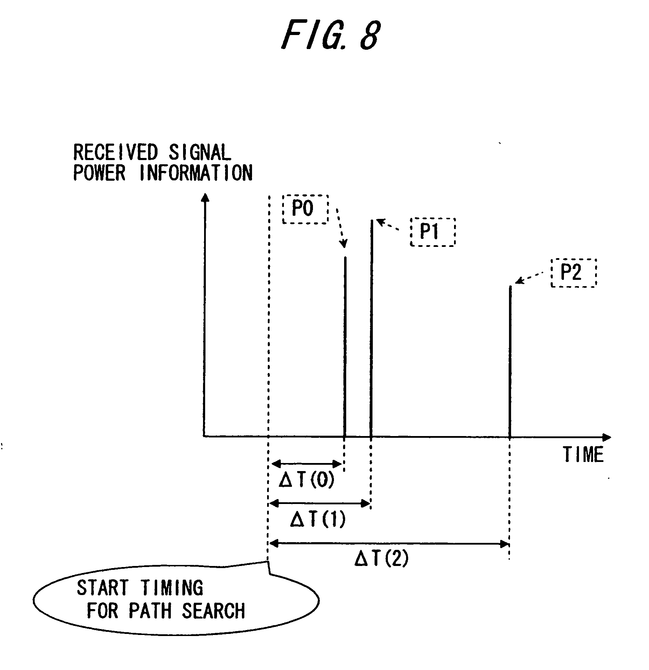

FIG. 8 is a diagram showing a delay profile in the third embodiment;

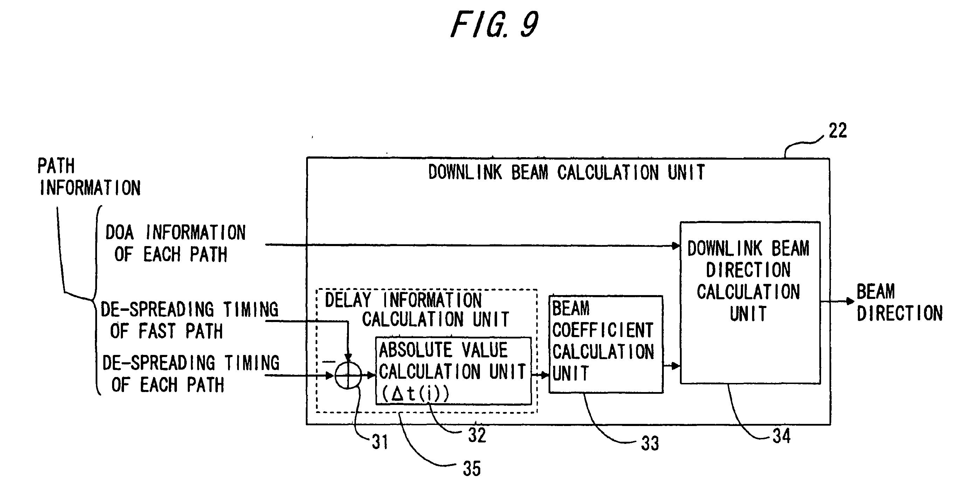

FIG. 9 is a diagram showing a functional configuration of the downlink beam calculation unit in a fourth embodiment;

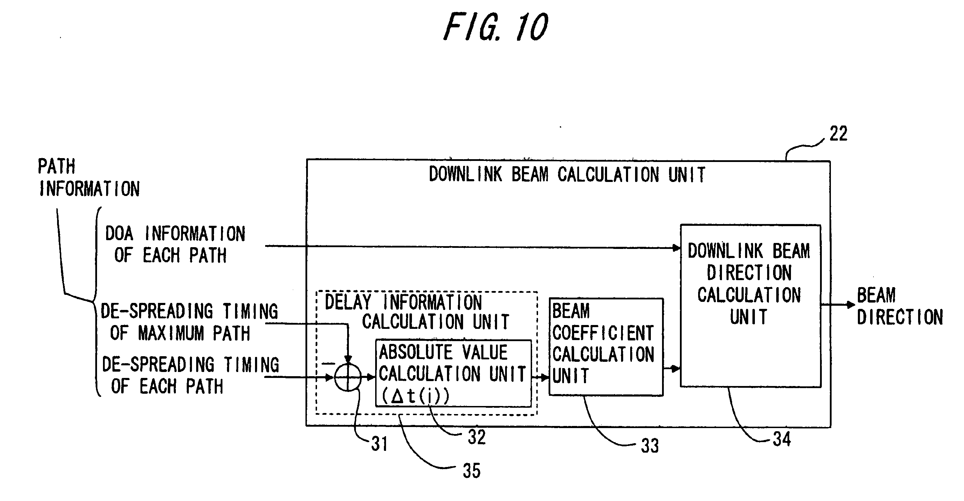

FIG. 10 is a diagram showing a functional configuration of a first modified example of the downlink beam calculation unit in the fourth embodiment;

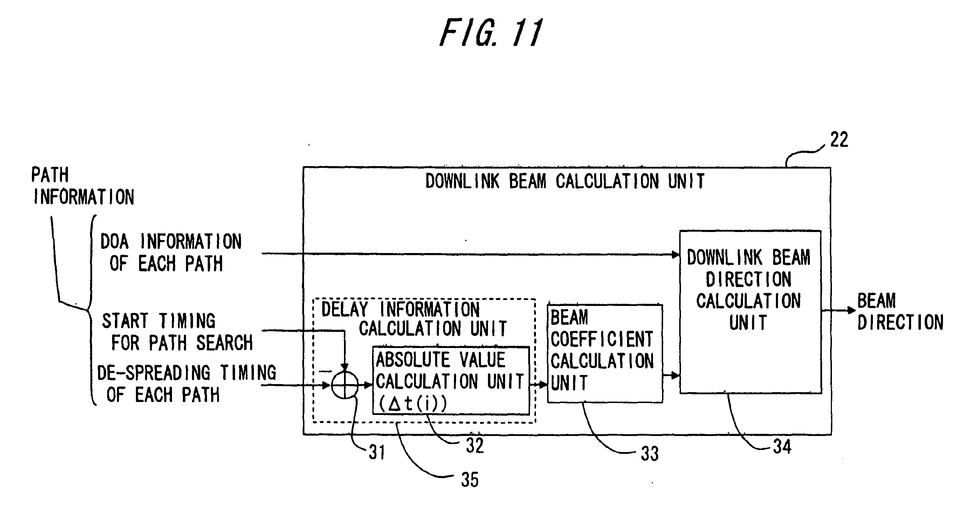

FIG. 11 is a diagram showing a functional configuration of a second modified example of the downlink beam calculation unit in the fourth embodiment;

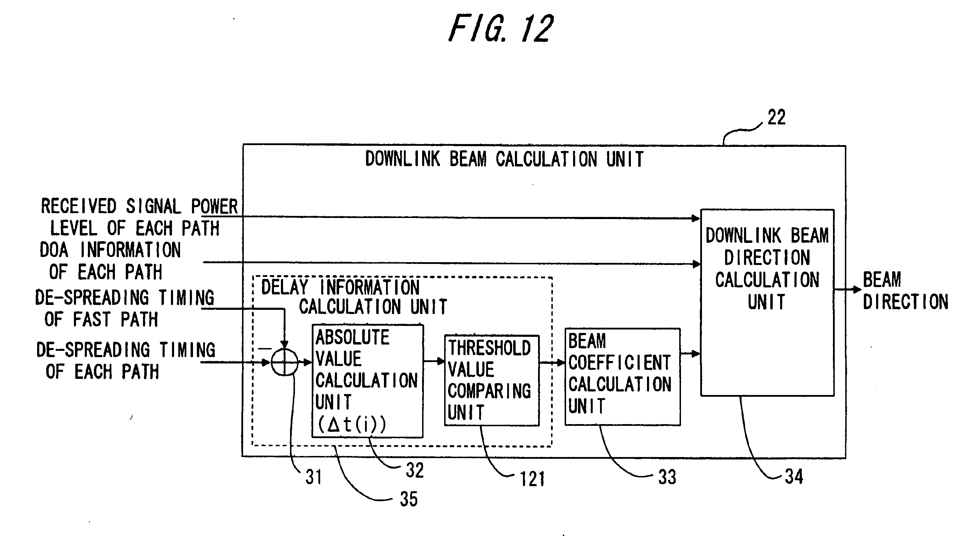

FIG. 12 is a diagram showing a functional configuration of the downlink beam calculation unit in a fifth embodiment;

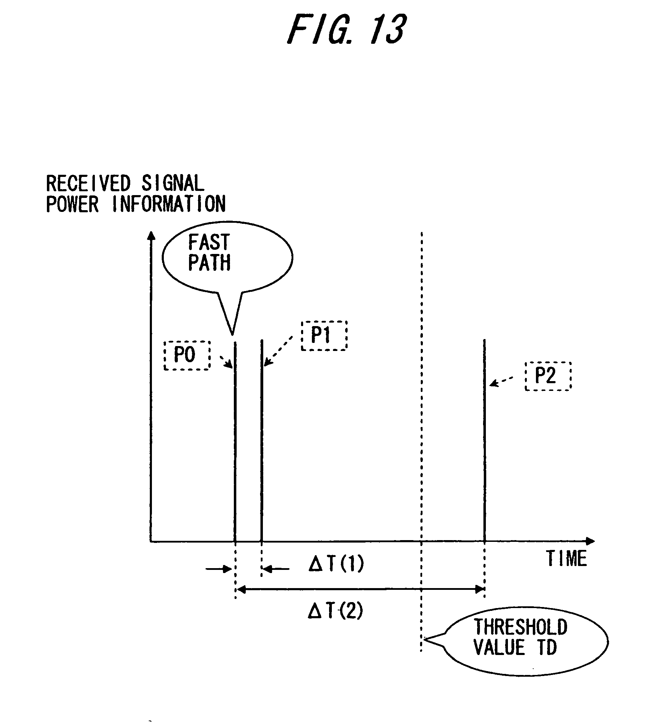

FIG. 13 is a diagram showing a delay profile in the fifth embodiment;

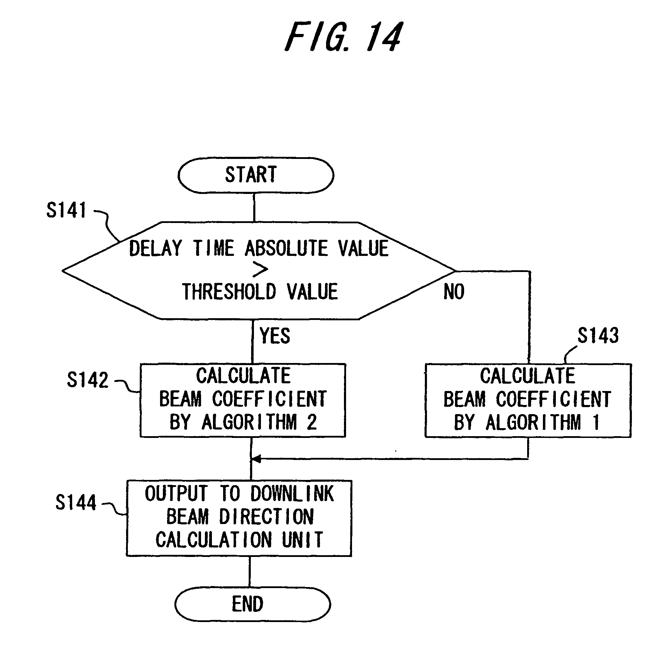

FIG. 14 is a flowchart showing a beam coefficient calculation processing flow in the fifth embodiment;

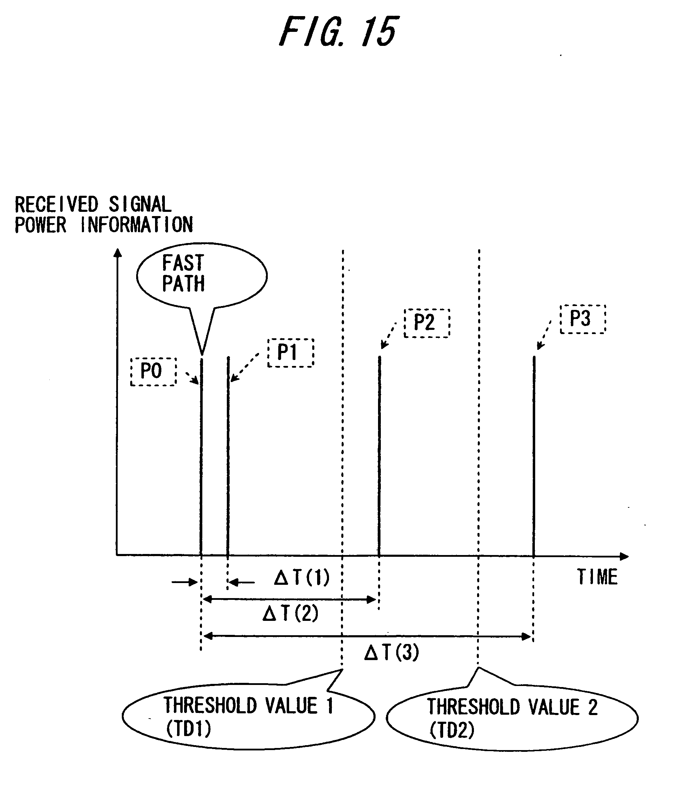

FIG. 15 is a diagram showing a delay profile in a modified example of the fifth embodiment;

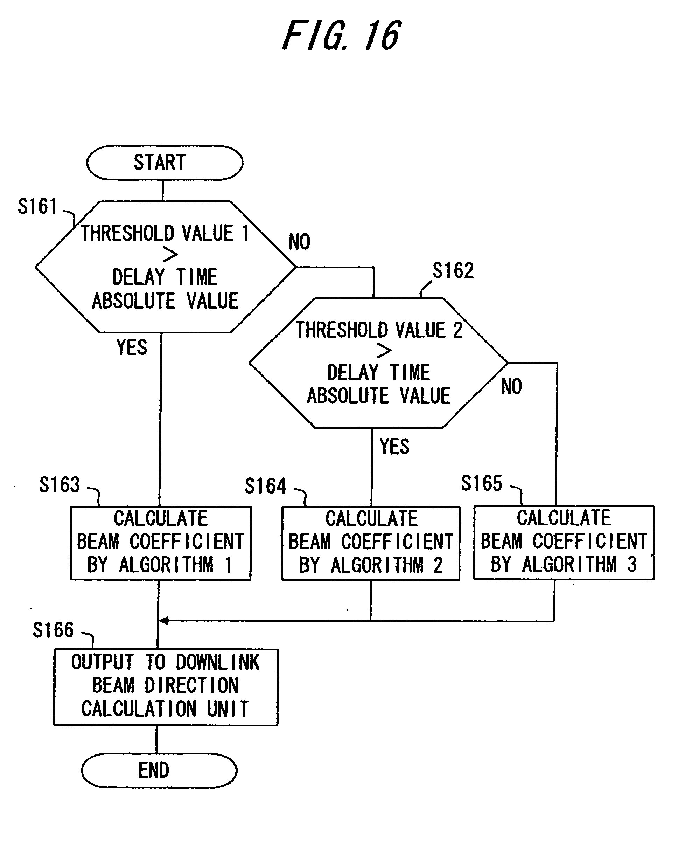

FIG. 16 is a flowchart showing the beam coefficient calculation processing flow in the modified example of the fifth embodiment;

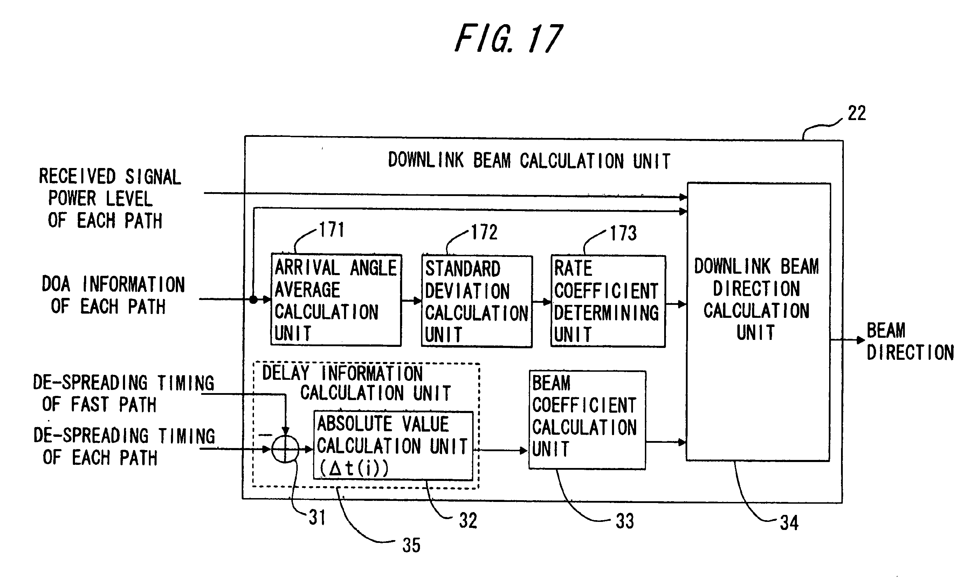

FIG. 17 is a diagram showing a functional configuration of the downlink beam calculation unit in a sixth embodiment;

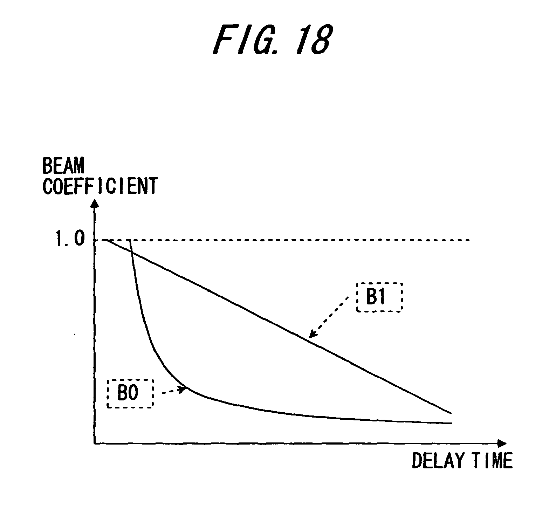

FIG. 18 is a diagram showing a beam coefficient in the modified example of the embodiment;

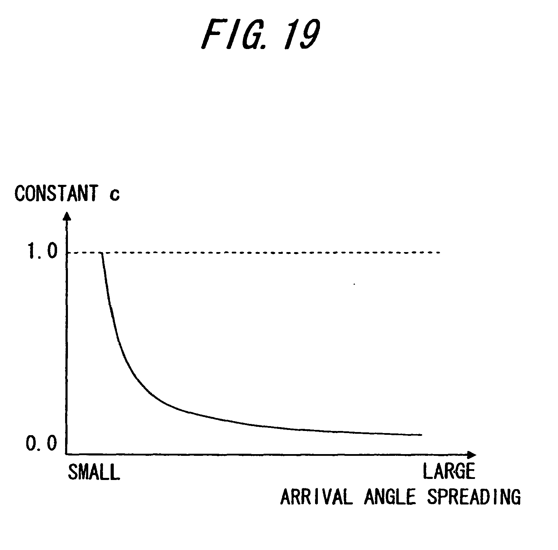

FIG. 19 is a diagram showing a relationship between a constant "c" and arrival angle spread;

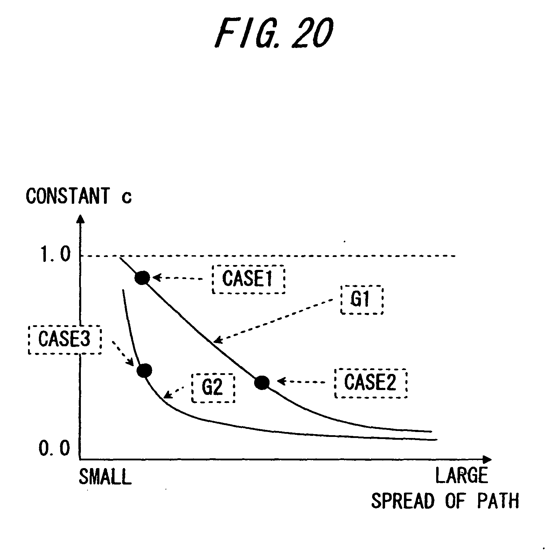

FIG. 20 is a diagram showing a relationship between the constant "c" and path distribution;

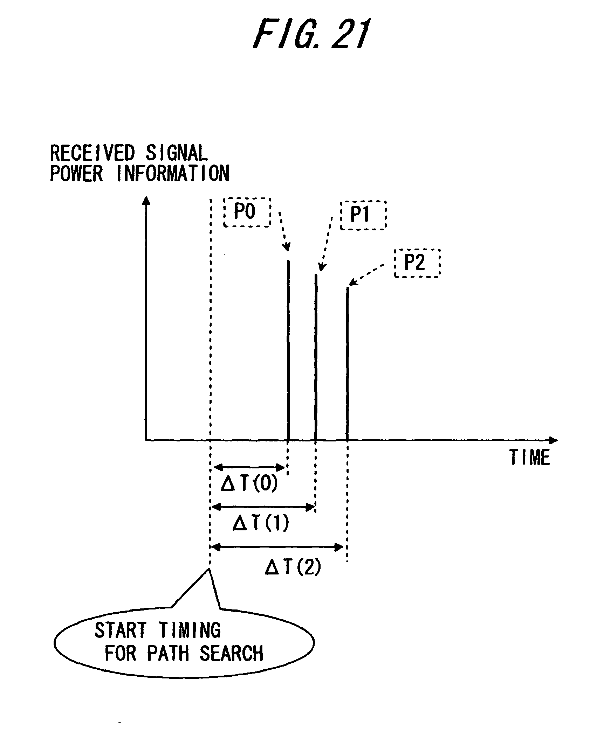

FIG. 21 is a diagram showing a first example of the path distribution;

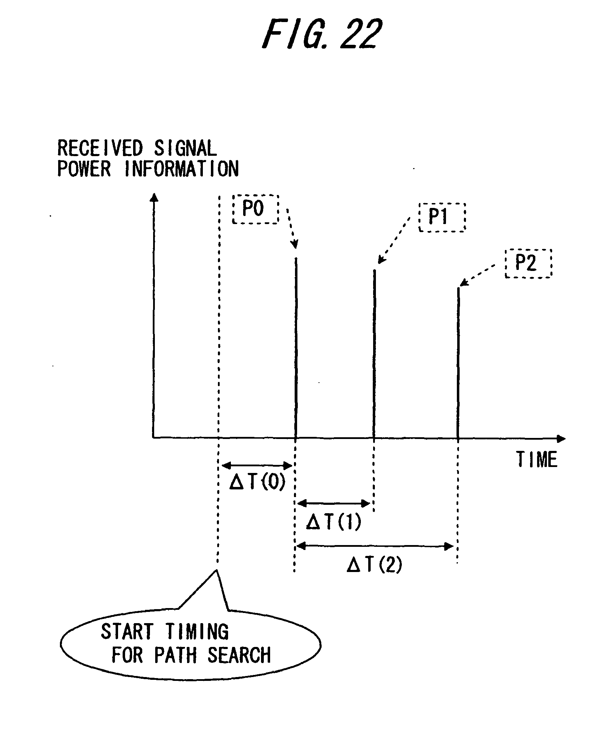

FIG. 22 is a diagram showing a second example of the path distribution;

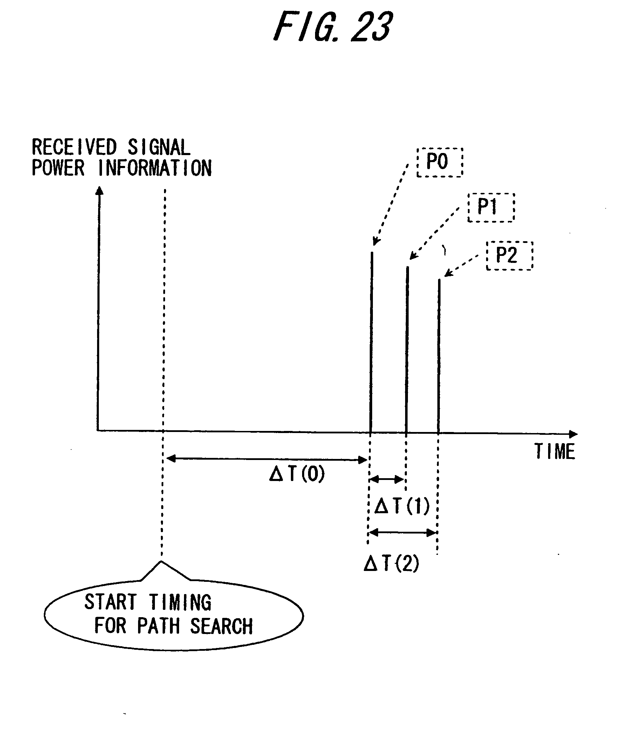

FIG. 23 is a diagram showing a third example of the path distribution;
FIG. 24 is a diagram showing an example of a propagation model in which a multi-path count is 3;
FIG. 25 is a diagram showing a delay profile; and
FIG. 26 is a diagram showing an example of determining a beam direction according to a conventional method.

## DESCRIPTION OF THE PREFERRED EMBODIMENTS

[Outline of embodiment of the present invention]

For discussing an embodiment of the present invention, to begin with, a functional outline of a wireless communication system in the embodiment of the present invention will be described. Herein, along an example of a propagation model illustrated in FIG. 24 given above, the explanation is made referring to FIGS. 1 and 25. FIG. 1 is a diagram showing a case example in which the wireless communication system in the embodiment determines a beam transmitting direction. Note that FIGS. 24 and 25 are the drawings as described earlier.

The wireless communication system in the embodiment is assumed to be a system operating on a base station receiving a signal transmitted from a mobile station, and determines a beam direction obtained on an uplink as a transmitting direction of the signal on a downlink (which will hereafter be also termed a downlink beam direction). In the wireless communication system, the determination of the downlink beam direction involves using, as parameters, (a) delay information from a fastest reach path, (b) delay information from a path having a maximum received signal power level, (c) delay information from a start timing for a path search, (d) received signal power information of the path, (e) arrival angle distribution information of the path and so on.

An outline will hereinafter be described by exemplifying a downlink beam determination method in the case of using (a) the delay information from the fastest reach path among the parameters. FIG. 1 shows, in a propagation environment illustrated in FIG. 24, a result of calculating the beam direction out of delay time from the fast path in this method.

The propagation model illustrated in FIG. 24 is that the beam from a path P2 among the beams reaching the base station is a reflected wave, and hence time of reaching the base station is greatly delayed as compared with the beams from other paths P0, P1 (see FIG. 25). On the other hand, the beam passing through the fastest reach path P0 and the beam passing through the path P1 reach the base station almost at the same time (see FIG. 25).

From these points, in the example of the propagation model, if the downlink beam direction is determined based on only the signals arrived from the paths P0 and P1, the beam can be directed toward the mobile station. This is because arrival angles of the paths P0 and P1 are given such as the path P0: -5 degrees and the path P1: +5 degrees, and, supposing that the received signal power is the same, the downlink beam direction can be determined to be 0 degree from an average of these arrival angles (= 1 / 2 (-5 + 5)) on the basis of the (Formula 1) given above (see FIG. 1).

Namely, this method involves, on the occasion of determining the direction of downlink beam, judging an influence degree of each path by use of arrival delay information of each path, and determining the proper beam direction by weighting so that the influence degree of the information about each of the paths P0 and P1 is greater than the information about the path P2. With this contrivance, the influence of the path P2 diminishes, and factors of the paths P0 and P1 become dominant. Accordingly, the determined beam direction is oriented toward the mobile station.

Thus, in the wireless communication system in the embodiment, the influence degrees of the respective paths are determined from the various items of information (the items of (a) through (e), etc. given above) about the individual paths, thereby determining the downlink beam direction.

The wireless communication system in the embodiments of the present invention will hereinafter be described in greater detail with reference to the drawings. Configurations in the embodiments that will hereinafter be described are exemplifications, and the present invention is not limited to the configurations in the following embodiments.

[First Embodiment]

To start with, the wireless communication system in a first embodiment of the present invention will hereinafter be explained.

[System Architecture]

A system architecture of the wireless communication system (which will hereafter be simply referred to as this system) in the first embodiment, will be described with reference to FIGS. 2, 3 and 4. FIG. 2 is a block diagram showing the system architecture of the wireless communication system in the first embodiment. FIG. 3 is a block diagram showing a functional configuration of a downlink beam calculation unit in the first embodiment. FIG. 4 is a diagram showing a delay profile in the first embodiment.

This system includes a CPU (Central Processing Unit), a memory, an input/output interface, etc., and this CPU executes a control program etc. stored on the memory, thereby controlling respective function units given below. Further, the individual function units shown below may be set to operate by hardware logic.

This system is assumed to be a system operating on the base station receiving the signal from the mobile station, and is largely constructed of function units of a receiving system and function units of a transmitting system. To be specific, the system is constructed of an array antenna (un-illustrated), a matched filter unit (which will hereinafter be abbreviated to a MF unit) 10, an uplink digital beam forming unit (which will hereinafter be abbreviated to a DBF(U) unit) 11, a synthesizing unit 12, a synchronous detection unit 13, a decoding unit 14, a signal-to-interference ratio estimation unit (which will hereinafter be termed an SIR estimation unit) 15, an uplink antenna weight generating unit (which will hereinafter be referred to as a weight (U) generating unit) 16, a coding unit 17, a transmission power control unit 18, a modulation unit 19, a downlink digital beam forming unit (which will hereinafter be abbreviated to a DBF (D) unit) 20, a sampling rate converter unit (which will hereinafter be abbreviated to an SRC unit) 21, a downlink beam calculation unit 22, an uplink digital beam forming unit (which will hereinafter be abbreviated to a DBF (U) unit) 23, and so on.

It should be noted that the units essential to the present invention among these function units are the function units related to the SRC unit 21, the downlink beam calculation unit 22 and the weight (D) generating unit 23, and hence other function units are not limited to the configurations given above. It may be sufficient that those other function units take configurations capable of actualizing an adaptive array antenna technology.

At first, the function units of the receiving system among the respective function units provided in this system will hereinafter be explained.

FIG. 2 shows an example of the system architecture in the case of providing an array antenna constructed of four pieces of antenna elements (antennas 0 through 3), wherein the signals received by the respective antenna elements are inputted to this system. Note that this system does not limit the number of the antenna elements.

The MF 10 de-spreads the signals received from the respective antenna elements at a de-spreading timing received from the SRC unit 21 by use of a spreading code corresponding to the mobile station (such as a wireless terminal) serving as a communication partner terminal. The de-spread signals are transferred to the DBF (U) unit 11 and the weight (U) generating unit 16.

The SRC unit 21 detects a multi-path timing based on the received signals from the respective antenna elements. The SRC unit 21 further obtains a de-spreading timing, an arrival direction, etc. with respect to each of the detected paths. The SRC unit 21 transfers the de-spreading timing in the thus-obtained information to the MF unit 10, and transfers the direction-of-arrival information (which will hereinafter be termed DOA information) to the weight (U) generating unit 16. The SRC unit 21 further has other functions, and therefore these functions will be described later on.

The weight (U) generating unit 16 obtains a weighted coefficient (which is simply referred to as a weight) for optimizing a received signal level on the basis of the de-spread signals received from the MF unit 10, the DOA information received from the SRC unit 21, the signal received from the synthesizing unit 12, the signal received from the synchronous detection unit 13, and so on. The weight (U) generating unit 16 transfers this weight to the DBF (U) unit 11.

The DBF (U) unit 11, upon receiving the de-spread signals corresponding to the respective antenna elements, controls phases thereof on the basis of the weight received from the weight (U) generating unit 16. The thus-adaptation-controlled and formed signals are each transferred to the synthesizing unit 12.

Hereafter, the adaptation-controlled signals are synthesized by the synthesizing unit 12 and decoded by the synchronous detection unit 13 and by the decoding unit 14, thus becoming reception data.

This system has, in addition to the aforementioned function units of the receiving system, function units, shown below, for processing the received signals in order to be used when transmitting to the mobile station as the communication partner terminal.

The SRC unit 21, other than the process described above, further obtains a received signal power level with respect to each of the detected paths. As a result, the SRC unit 21 transfers the obtained information (the de-spreading timing, the DOA information, the received signal power level) to the downlink beam calculation unit 22 in such a form that these pieces of information correspond to the detected paths.

The downlink beam calculation unit 22 calculates the downlink beam direction on the basis of the information (the de-spreading timing, the DOA information, the received signal power level) received from the SRC unit 21. Information about the calculated downlink beam direction is transferred to a weight (D) generating unit 23. A more detailed description of the downlink beam calculation unit 22 will be given later on.

The weight (D) generating unit 23, based on the downlink beam direction received from the downlink beam calculation unit 22, obtains a weight for optimizing the received signal level in the target mobile station. The weight (D) generating unit 23 transfers the obtained weight to the DBF (D) unit 20.

The SIR estimation unit 15 estimates a signal-to-interference ratio on the basis of the signal outputted from the synchronous detection unit 13. The SIR estimation unit 15 transfers the signal-to-interference ratio to the transmission power control unit 18.

Next, the function units of the transmitting system among the individual function units provided in this system, will be explained.

This system, when receiving transmission data, inputs the data to the coding unit 17. The coding unit 17 codes the transmission data and transfers the coded data to the modulation unit 19. The modulation unit 19 effects a predetermined modulation process upon the coded transmission signal. The modulated signal is transferred to the DBF (D) unit 20. Further, in the modulation unit 19, the transmission power control unit 18 compares, for example, an SIR target value with an SIR estimation value based on the received signal, and sets a predetermined value in a TPC (Transmit Power Control) bit for controlling the transmission power of the mobile station on the basis of this compared result.

The DBF (D) unit 20 allocates the signals received from the modulation unit 19 in a way that corresponds to the respective antenna elements, then multiplies the respective signals by an optimum weight received from the weight (D) generating unit 23, and outputs these signals. The signals generated herein are transmitted from the individual antennas.

[Downlink Beam Calculation Unit]

An in-depth configuration of the aforementioned downlink beam calculation unit 22 will be explained with reference to FIG. 3. The downlink beam calculation unit 22 includes a delay information calculation unit 35, a beam coefficient calculation unit 33 and a downlink beam direction calculation unit 34. The delay information calculation unit 35 further includes a subtracter 31 and an absolute value calculation unit 32.

The subtracter 31, when receiving the de-spreading timing from the SRC unit 21, acquires delay time ($\Delta t(i)$) of the de-spreading timing in each path from the de-spreading timing in the fast path of the signal arrival (which will hereinafter be referred to as the fast path) in the plurality of paths. The subtracter 31 transfers the calculated delay time of each path to the absolute value calculation unit 32.

The absolute value calculation unit 32 calculates an absolute value of each received delay time of the path. The absolute value calculation unit 32 transfers each of the delay time absolute values ($|\Delta t(i)|$) in the respective paths to the beam coefficient calculation unit 33. Note that the absolute value calculation unit 32 may obtain a square value instead of acquiring the absolute value.

The beam coefficient calculation unit 33 calculates a weight coefficient (which is herein termed a beam coefficient) for calculating the downlink beam direction from the delay time absolute value received from the absolute value calculation unit 32 on the basis of the following (Formula 2). Note that the beam coefficient of the fast path is set to "1". The calculated beam coefficient of each path is transferred to the downlink beam direction calculation unit 34. It is to be noted that "i" in the following (Formula 2) is a numerical value representing each path. Further, "c" is a predetermined constant, and involves using a value stored beforehand on, e.g., the memory etc.. Details of the constant "c" will be explained later on.

$$k(i) = c \times 1 / |\Delta t(i)| \cdots (\text{Formula 2})$$

The downlink beam direction calculation unit 34 calculates, based on the following (Formula (3)), the downlink beam direction by use of the beam coefficient received from the beam coefficient calculation unit 33, and the received signal power level and the DOA information received from the SRC unit 21. The downlink beam direction calculation unit 34 transfers the calculated beam direction to the weight (D) generating unit 23.

$$\text{Downlink Beam Direction} = 1 / 3 \times (\Sigma \theta(i) \times P(i) \times k(i)) \cdots (\text{Formula 3})$$

[Operational Example of Downlink Beam Calculation Unit]

Next, an operational example of the downlink beam calculation unit 22 will be described with reference to FIG. 4. FIG. 4 is a diagram showing a delay profile in the first embodiment. FIG. 4 shows how the arrival signals from the three paths P0, P1 and P2 are received in the sequence of the path P0 -> the path P1 -> the path P2.

In this case, the subtracter 31 receives the de-spreading timings of the respective paths P0, P1 and P2 from the SRC unit 21. The subtracter 31 determines, based on the individual de-spreading timings, the path P0 to be the fast path, and acquires the delay time of each path from this fast path P0. $\Delta t(1)$ is obtained as the delay time of the path P1, and $\Delta t(2)$ is obtained as the delay time of the path P2.

Subsequently, the absolute value calculation unit 32 obtains the delay time absolute value of each path. $|\Delta t(1)|$ is obtained as the delay time absolute value of the path P1, and $|\Delta t(2)|$ is obtained as the delay time absolute value of the path P2. The thus-obtained delay time absolute values are transferred to the beam coefficient calculation unit 33.

The beam coefficient calculation unit 33 obtains beam coefficients k(i) from the delay time absolute values of the respective paths. Each of the obtained beam coefficients is transferred to the downlink beam direction calculation

unit 34.

$$\text{Path P1: } k(1) = c \times 1 / |\Delta t(1)|$$

$$\text{Path P2: } k(2) = c \times 1 / |\Delta t(2)|$$

$$\text{Path P0 (the fast path): } k(0) = 1$$

The downlink beam direction calculation unit 34 determines, based on the aforementioned (Formula 3), the downlink beam direction from the respective beam coefficients.

$$\text{Downlink Beam Direction} = 1 / 3 \times \{(\theta(0) \times P(0) \times 1) + (\theta(1) \times P(1) \times k(1)) + (\theta(2) \times P(2) \times k(2))\}$$

(Operation/Effect in First Embodiment)

Herein, an operation and an effect of the wireless communication system in the first embodiment discussed above, will be described.

In this system, the downlink beam calculation unit 22 receives the de-spreading timings, the DOA information and the received signal power levels of the respective paths from the SRC unit 21, and calculates, based on these items of information, the downlink beam direction.

In the downlink beam calculation unit 22, the delay time to the de-spreading timing of each of other paths is calculated from the de-spreading timing of the path detected as the fastest arrival path among the received signals. Further, the beam coefficient using an inverse number of the delay time is obtained with respect to each path. Then, this beam coefficient is used as the weight to the received signal power level and the DOA information of the target path, thereby determining the downlink beam direction.

The weight optimizing the received signal level in the target mobile station is acquired based on the thus determined downlink beam direction, and the signal in which this optimum weight is reflected is transmitted.

Thus, in the first embodiment, from the de-spreading timing of the fastest arrival path, the delay time to the de-spreading timing of each path is used as the weight, and the downlink beam direction is determined. With this contrivance, the influence degree of the path having the large delay time is reduced, and the downlink beam direction can be determined, whereby the proper beam direction can be determined and, more essentially, a communication quality with the mobile station can be improved.

[Second Embodiment]

The wireless communication system in a second embodiment of the present invention will hereinafter be described. The wireless communication system in the first embodiment explained earlier is that the beam coefficient k(i) is calculated by use of the delay information from the fast path, and the downlink beam direction is calculated by employing the beam coefficient k(i), the received signal power information P(i) and the arrival angle information θ(i) of each path. The wireless communication system in the second embodiment is that the beam coefficient k(i) is calculated by use of the delay information from the path having the maximum received signal power level (which will hereinafter be termed the maximum path) among the plurality of paths.

(System Architecture)

The wireless communication system in the second embodiment is configured by the same function units as those in the first embodiment (see FIG. 2). The downlink beam calculation unit 22, however, operates differently from in the first embodiment and is therefore explained as below. The explanations of the same other function units as those in the first embodiment are omitted. FIG. 5 is a block diagram showing a functional configuration of the downlink beam calculation unit in the second embodiment.

The downlink calculation unit 22 receives the received signal power level, the DOA information and the de-spreading timing for every path from the SRC unit 21.

The subtracter 31, when receiving the de-spreading timing from the SRC unit 21, obtains the delay time ($\Delta t(i)$) to the de-spreading timing in each path from the de-spreading timing in the path exhibiting the maximum received signal power level among the plurality of paths. The subtracter 31 transfers the calculated delay time of each path to the absolute value calculation unit 32.

Hereafter, the absolute value calculation unit 32, the beam coefficient calculation unit 33 and the downlink beam direction calculation unit 34 operate in the same way as in the first embodiment. Namely, the downlink beam direction is calculated in the (Formula 2) and the (Formula 3).

[Operational Example of Downlink Beam Calculation Unit]

Next, an operational example of the downlink beam calculation unit 22 will be described with reference to FIG. 6. FIG. 6 is a diagram showing a delay profile in the second embodiment. FIG. 6 shows how the arrival signals from the three paths P0, P1 and P2 are received in the sequence of the path P0 -> the path P1 -> the path P2 and also shows that the received signal power level of the path P1 is the maximum.

In this case, the subtracter 31, when receiving the de-spreading timings of the respective paths P0, P1 and P2 from the SRC unit 21, determines, based on the individual de-spreading timings similarly received from the SRC unit 21, the path P1 to be the maximum path. The subtracter 31 calculates, based on the respective de-spreading timings, the delay time ($\Delta t(0)$) of the path P0 and the delay time ($\Delta t(2)$) of the path P2 from the maximum path P1.

Subsequently, the absolute value calculation unit 32 obtains the delay time absolute value of each path. $|\Delta t(0)|$ is obtained as the delay time absolute value of the path P0, and $|\Delta t(2)|$ is obtained as the delay time absolute value of the path P2. The thus-obtained delay time absolute values are transferred to the beam coefficient calculation unit 33.

The beam coefficient calculation unit 33 respectively obtains the beam coefficients k(i) from the delay time absolute values of the respective paths. Each of the obtained beam coefficients is transferred to the downlink beam direction calculation unit 34.

$$\texttt{Path P0: k(0) = c} \times \texttt{1 / } |\Delta\texttt{t(0)}|$$

$$\texttt{Path P2: k(2) = c} \times \texttt{1 / } |\Delta\texttt{t(2)}|$$

The downlink beam direction calculation unit 34 determines, based on the aforementioned (Formula 3), the downlink beam direction from the respective beam coefficients.

$$\texttt{Downlink Beam Direction = 1 / 3} \times \{(\theta\texttt{(0)} \times \texttt{P(0)} \times$$

$$\texttt{k(0)) + (}\theta\texttt{(1)} \times \texttt{P(1)} \times \texttt{1) + (}\theta\texttt{(2)} \times \texttt{P(2)} \times \texttt{k(2))}\}$$

<Operation/Effect in Second Embodiment>

Herein, an operation and an effect of the wireless communication system in the second embodiment discussed above, will be described.

In this system, as in the first embodiment, the downlink beam calculation unit 22, based on the de-spreading timings, the DOA information and the received signal power levels about the respective paths, calculates the downlink beam direction.

In the downlink beam calculation unit 22, the delay time to the de-spreading timing of each of other paths is calculated from the de-spreading timing of the path exhibiting the maximum received signal power level among the received signals. Further, the beam coefficient using an inverse number of the delay time is obtained with respect to each path. Then, this beam coefficient is used as the weight to the received signal power level and the DOA information of the target path, thereby determining the downlink beam direction.

Thus, in the second embodiment, from the de-spreading timing of the path exhibiting the maximum received signal power level, the delay time to the de-spreading timing of each path is used as the weight, and the downlink beam direction is determined. With this contrivance, the influence degree of the path having the small received signal power level is reduced, and the downlink beam direction can be determined. Generally, most of the paths with the small received signal power level have interference waves, and it is therefore possible to determine the proper beam direction by decreasing an influence degree thereof and, more essentially, to improve the communication quality with the mobile station.

[Third Embodiment]

The following is a description of the wireless communication system in a third embodiment of the present invention. In the wireless communication system in the first embodiment discussed earlier, the downlink beam direction is calculated by use of the delay information from the fast path. The wireless communication system in the third embodiment is that the beam coefficient k(i) is calculated by using the delay information from a start timing for a path search in each path.

[System Architecture]

The wireless communication system in the third embodiment is configured by the same function units as those in the first embodiment (see FIG. 2). The downlink beam calculation unit 22, however, operates differently from in the first embodiment and is therefore explained as below. The explanations of the same other function units as those in the first embodiment are omitted. FIG. 7 is a block diagram showing a functional configuration of the downlink beam calculation unit in the third embodiment.

The downlink beam calculation unit 22 receives the received signal power level, the DOA information and the de-spreading timing for every path from the SRC unit 21, and further receives the start timing for the path search. The start timing for the path search may be set so that information used for the SRC unit 21 to perform a path search is transferred as it is to the beam calculation unit 22.

The subtracter 31, when receiving these items of information from the SRC unit 21, obtains the delay time ($\Delta t(i)$) to the de-spreading timing from the start timing for the path search in each path. The subtracter 31 transfers the calculated delay time of each path to the absolute value calculation unit 32.

Hereafter, the absolute value calculation unit 32, the beam coefficient calculation unit 33 and the downlink beam direction calculation unit 34 operate in the same way as in the first embodiment. Namely, the downlink beam direction is calculated in the (Formula 2) and the (Formula 3).

[Operational Example of Downlink Beam Calculation Unit]

Next, an operational example of the downlink beam calculation unit 22 will be described with reference to FIG. 8. FIG. 8 is a diagram showing a delay profile in the third embodiment. FIG. 8 shows how the arrival signals from the three paths P0, P1 and P2 are received in the sequence of the path P0 -> the path P1 -> the path P2 and also shows a relationship between the received timing of each path and the start timing for the path search.

In this case, the subtracter 31 receives the start timing for the path search together with the de-spreading timings of the respective paths P0, P1 and P2 from the SRC unit 21. The subtracter 31 calculates, based on the start timing for the path search, the delay time ($\Delta t(0)$) of the path P0, the delay time ($\Delta t(1)$) of the path P1 and the delay time ($\Delta t(2)$) of the path P2.

Subsequently, the absolute value calculation unit 32 obtains the delay time absolute value of each path. $|\Delta t(0)|$ is obtained as the delay time absolute value of the path P0, $|\Delta t(1)|$ is obtained as the delay time absolute value of the path P1, and $|\Delta t(2)|$ is obtained as the delay time absolute value of the path P2. The thus-obtained delay time absolute values are transferred to the beam coefficient calculation unit 33.

The beam coefficient calculation unit 33 respectively obtains the beam coefficients k(i) from the delay time absolute values of the respective paths. Each of the obtained beam coefficients is transferred to the downlink beam direction calculation unit 34.

$$\text{Path P0: } k(0) = c \times 1 / |\Delta t(0)|$$

$$\text{Path P1: } k(1) = c \times 1 / |\Delta t(1)|$$

$$\text{Path P2: } k(2) = c \times 1 / |\Delta t(2)|$$

The downlink beam direction calculation unit 34 determines, based on the following (Formula 3), the downlink beam direction from the respective beam coefficients.

$$\texttt{Downlink Beam Direction = 1 / 3} \times \{(\theta(0) \times P(0) \times k(0)) + (\theta(1) \times P(1) \times k(1)) + (\theta(2) \times P(2) \times k(2))\}$$

(Operation/Effect in Third Embodiment)

Herein, an operation and an effect of the wireless communication system in the third embodiment discussed above, will be described.

In this system, unlike the first embodiment, the start timing for the path search in addition to the items of information about the respective paths is used, and the downlink beam calculation unit 22 calculates the downlink beam direction.

In the downlink beam calculation unit 22, the delay time to the de-spreading timing of each path is calculated from the start timing for the path search that is transferred from the SRC unit 21. Further, the beam coefficient using an inverse number of the delay time is obtained with respect to each path. Then, this beam coefficient is used as the weight to the received signal power level and the DOA information of the target path, thereby determining the downlink beam direction.

Thus, in the third embodiment, from the start timing for the path search, the delay time to the de-spreading timing of each path is used as the weight, and the downlink beam direction is determined. With this contrivance, the influence degree of the path having the large delay time from the start timing for the path search is reduced, and the downlink beam direction can be determined.

[Fourth Embodiment]

The wireless communication system in a fourth embodiment of the present invention will hereinafter be described. The wireless communication system in the first embodiment explained earlier is that the beam coefficient k(i) is calculated by use of the delay information from the fast path, and the downlink beam direction is calculated by employing the beam coefficient k(i), and the received signal power information P(i) and the arrival angle information θ (i) of each path. In the wireless communication system in the fourth embodiment, the downlink beam direction is calculated by use of the beam coefficient k(i) and only the arrival angle information θ (i).

[System Architecture]

The wireless communication system in the fourth embodiment is configured by the same function units as those in the first embodiment (see FIG. 2). The downlink beam calculation unit 22, however, operates differently from in the first embodiment and is therefore explained as below. The explanations of the same other function units as those in the first embodiment are omitted. FIG. 9 is a block diagram showing a functional configuration of the downlink beam calculation unit in the fourth embodiment.

The functions of the subtracter 31, the absolute value calculation unit 32 and the beam coefficient calculation unit 33 within the downlink beam calculation unit 22 are respectively the same as those in the first embodiment, and hence their explanations are omitted.

The downlink beam direction calculation unit 34 calculates the downlink beam direction based on the following (Formula 4) by use of the beam coefficient received from the beam coefficient calculation unit 33 and the DOA information received from the SRC unit 21.

$$\texttt{Downlink Beam Direction = 1 / 3} \times ( \Sigma \theta(\texttt{i}) \times \texttt{k(i)} )$$

$$\cdots \texttt{(Formula 4)}$$

[Operational Example of Downlink Beam Calculation Unit]

An operational example of the downlink beam calculation unit in the fourth first embodiment will be described by exemplifying a delay profile shown in FIG. 4 in the first embodiment. Namely, this is an example of the case in which the arrival signals from the three paths P0, P1 and P2 are received in the sequence of the path P0 -> the path P1 -> the path P2. In this case, as in the first embodiment, the beam coefficients shown below are transferred to the downlink beam direction calculation unit 34.

$$\text{Path P1: } k(1) = c \times 1 / |\Delta t(1)|$$

$$\text{Path P2: } k(2) = c \times 1 / |\Delta t(2)|$$

$$\text{Path P0 (the fast path): } k(0) = 1$$

The downlink beam direction calculation unit 34 determines, based on the (Formula 4), the downlink beam direction from the respective beam coefficients.

$$\text{Downlink Beam Direction} = 1 / 3 \times \{(\theta(0) \times 1) + (\theta(1) \times k(1)) + (\theta(2) \times k(2))\}$$

(Operation/Effect in Fourth Embodiment)

Herein, an operation and an effect of the wireless communication system in the fourth embodiment discussed above, will be described.

In this system, unlike the first embodiment, the downlink beam calculation unit 22 calculates the downlink beam direction from the de-spreading timing and the DOA information with respect to each of the paths. Namely, the beam direction is calculated without using the received signal power level in each path.

In the downlink beam calculation unit 22, the beam coefficient using an inverse number of the delay time is obtained with respect to each path based on the delay time from the de-spreading timing of the fastest arrival path to the de-spreading timing of each other paths. Then, this beam coefficient is used as the weight to the DOA information of the target path, thereby determining the downlink beam direction.

Thus, in the fourth embodiment, the beam coefficient is used as the weight to the DOA information, and the downlink beam direction is determined based on only the DOA information.

(First Modified Example of Fourth Embodiment)

In the wireless communication system in the fourth embodiment discussed above, the beam coefficient k(i) is calculated by employing the delay information from the fast path, and the downlink beam direction is calculated by using the beam coefficient k(i) and the arrival angle information θ (i).

There may be adopted such a configuration that the beam coefficient k(i) is, as in the second embodiment, calculated by use of the delay information from the maximum path. FIG. 10 shows a functional configuration of the downlink beam calculation unit 22 in this case. To be specific, the beam coefficient calculation unit 33 obtains the beam coefficient by employing the delay information from the maximum path, and the downlink beam direction calculation unit 34 determines the downlink beam direction by use of the beam coefficient in the (Formula 4) given above.

(Second Modified Example of Fourth Embodiment)

Further, an available configuration is that the beam coefficient k(i) is, as in the third embodiment, calculated by employing the delay information from the start timing for the path search. FIG. 11 illustrates a functional configuration of the downlink beam calculation unit 22 in this case. Specifically, the beam coefficient calculation unit 33 acquires the beam coefficient by using the delay information from the start timing for the path search, and the downlink beam direction calculation unit 34 determines the downlink beam direction by use of the beam coefficient in the (Formula 4) given above.

[Fifth Embodiment]

The wireless communication system in a fifth embodiment of the present invention will hereinafter be described.

The wireless communication system in the first embodiment explained earlier is that the beam coefficient k(i) is calculated by use of the delay information from the fast path, and the downlink beam direction is calculated by employing the beam coefficient k(i), and the received signal power information P(i) and the arrival angle information θ (i) of each path. The wireless communication system in the fifth embodiment involves changing the method of calculating the beam coefficient k(i).

[System Architecture]

The wireless communication system in the fifth embodiment is configured by the same function units as those in the first embodiment (see FIG. 2) other than the downlink beam calculation unit 22. With reference to FIG. 12, the following discussion will be focused on a different function of the downlink beam calculation unit 22 from in the first embodiment. The explanations of the same other function units as those in the first embodiment are omitted. FIG. 12 is a block diagram showing a functional configuration of the downlink beam calculation unit in the fifth embodiment.

The downlink beam calculation unit 22 has an addition of a threshold value comparing unit 121 within the delay information calculation unit 35, other than the function units in the first embodiment. With this configuration, the absolute value calculation unit 32 transfers, to the threshold value comparing unit 121, the delay time absolute value calculated for every path and given from the fast path.

The threshold value comparing unit 121 respectively compares the delay time absolute value in each path with a predetermined threshold value. The threshold value comparing unit 121 transfers compared results (such as being larger than the threshold value, being smaller than the threshold value, and so on) and the delay time absolute values to the beam coefficient calculation unit 33 in such a form that the compared results are associated with the delay time absolute values, respectively. This threshold value is retained beforehand on a memory etc., and the setting thereof may be done through other interfaces etc. so that the threshold value can be changed. For example, the threshold value comparing unit 121, in the case of acquiring a threshold value (TD) from the memory etc., compares the delay time absolute value ($|\Delta t(i)|$) with TD.

The beam coefficient calculation unit 33 calculates the beam coefficient from the compared result received from the threshold value comparing unit 121 and from the delay time absolute value in each path. At this time, the beam coefficient calculation unit 33 changes the beam coefficient calculation method based on the compared results. For instance, the beam coefficient calculation unit 33, when judging that the delay time absolute value ($|\Delta t(i)|$) is equal to or smaller than the threshold value (TD), may use the (Formula 2) ( $k(i) = c \times 1 / |\Delta t(i)|$ ), and, when judging that the delay time absolute value ($|\Delta t(i)|$) is larger than the threshold value (TD), may employ the (Formula 5). Note that the calculation of the beam coefficient involves using an inverse number of a square of the delay time in the (Formula 5), however, the beam coefficient may be set small when the delay time becomes large without being limited to the (Formula 5).

$$k(i) = c \times 1 / |\Delta t(i)|^2 \quad \cdots \text{(Formula 5)}$$

[Operational Example of Downlink Beam Calculation Unit]

Next, an operational example of the downlink beam calculation unit 22 will be described with reference to FIGS. 13 and 14. FIG. 13 is a diagram showing a delay profile in the fifth embodiment. FIG. 14 is a flowchart showing a process in the beam coefficient calculation unit in the fifth embodiment. FIG. 13 shows how the arrival signals from the three paths P0, P1 and P2 are received in the sequence of the path P0 -> the path P1 -> the path P2. Further, TD is used as a threshold value.

In this case, the threshold value comparing unit 121 judges that the delay time ($\Delta t(2)$) of the path P2 is larger than the threshold value (TD) and judges that the delay time ($\Delta t(1)$) of the path P1 is smaller than the threshold value (TD). These judged results are transferred to the beam coefficient calculation unit 33.

Algorithms corresponding to the compared results given by the threshold value comparing unit 121 are predetermined in the beam coefficient calculation unit 33. In a processing flow shown in FIG. 14, if the delay time absolute value is larger than the threshold value (TD) (S141; YES), an [algorithm 2] is used (S142). Further, if the delay time absolute value is equal to or smaller than the threshold value (TD) (S141; NO), an [algorithm 1] is used (S143).

Given herein is an example where the [algorithm 1] corresponds to the (Formula 2), and the [algorithm 2] corresponds to the (Formula 5). Namely, the beam coefficient calculation unit 33 uses the inverse number of the square of the delay time with respect to the path P2 (of which the delay time) judged, based on the compared result of the threshold value comparing unit 121, to be larger than the threshold value (TD), and uses the inverse number of the delay time with respect to the path P1 judged to be smaller than the threshold value (TD).

$$\text{Path P1: } k(1) = c \times 1 / |\Delta t(1)|$$

$$\text{Path P2: } k(2) = c \times 1 / |\Delta t(2)|^2$$

$$\text{Path P0 (the fast path): } k(0) = 1$$

The downlink beam direction calculation unit 34 determines, based on the (Formula 3), the downlink beam direction from the respective beam coefficients.

$$\text{Downlink Beam Direction} = 1 / 3 \times ((\theta(0) \times P(0) \times 1) +$$
$$(\theta(1) \times P(1) \times k(1)) + (\theta(2) \times P(2) \times k(2)))$$

(Operation/Effect in Fifth Embodiment)

Herein, an operation and an effect of the wireless communication system in the fifth embodiment discussed above, will be described.

In this system, as in the first embodiment, the downlink beam calculation unit 22, based on the de-spreading timings, the DOA information and the received signal power levels about the respective paths, calculates the downlink beam direction.

The downlink beam calculation unit 22 calculates the delay time from the de-spreading timing of the path, detected as the fastest arrival path among the received signal, to the de-spreading timing of each of other paths. Herein, the threshold value comparing unit 121 makes a comparison between the delay time of each path and the threshold value, whereby the beam coefficient calculation method is determined based on the compared result. Then, the beam coefficient calculation unit 33 calculates the beam coefficient on the basis of the thus-determined calculation method.

Thus, in the fifth embodiment, the beam coefficient calculation method is changed depending on whether the delay time in each path is within or beyond a predetermined threshold value range. Through this operation, the downlink beam direction can be determined by changing the influence degree of the path depending on whether the delay time is within or beyond the predetermined threshold value range, whereby a flexible method corresponding to the propagation environment can be adopted and, more essentially, the communication quantity with the mobile station can be improved.

(Modified Example of Fifth Embodiment)

In the wireless communication system in the fifth embodiment discussed above, the method of calculating the beam coefficient k(i) is determined by making use of one threshold value, however, a plurality of threshold values may also be employed therefor. An operational example of the downlink beam calculation unit 22 in the case of using the plurality of threshold values, will be described with reference to FIGS. 15 and 16. FIG. 15 is a diagram showing a delay profile in a modified example of the fifth embodiment. FIG. 16 is a flowchart showing a process in the beam coefficient calculation unit in the modified example of the fifth embodiment. FIG. 15 shows how the arrival signals from four paths P0, P1, P2 and P3 are received in the sequence of the path P0 -> the path P1 -> the path P2 -> the path P3. Further, TD1 and TD2 are employed as the threshold values.

In this case, the threshold value comparing unit 121 judges that the delay time ($\Delta t(3)$) of the path P3 is larger than the threshold value 2 (TD2), judges that the delay time ($\Delta t(2)$) of the path P2 is larger than the threshold value 1 (TD1), and judges that the delay time ($\Delta t(1)$) of the path P1 is smaller than the threshold value 1 (TD1). These compared results are transferred to the beam coefficient calculation unit 33.

Algorithms corresponding to the compared results given by the threshold value comparing unit 121 are predetermined in the beam coefficient calculation unit 33. A process of the beam coefficient calculation unit 33 will be explained with reference to FIG. 16.

The beam coefficient calculation unit 33, when judging that the delay time absolute value is smaller than the threshold value 1 (S161; YES), calculates the beam coefficient by the [algorithm 1] (S163). The beam coefficient calculation unit 33, when judging that the delay time absolute value is equal to or larger than the threshold value 1 (S161;

NO), sees whether or not judging that the delay time absolute value is smaller than the threshold value 2 (S162). Herein, the beam coefficient calculation unit 33, when judging that the delay time absolute value is smaller than the threshold value 2 (S162; YES), calculates the beam coefficient by the [algorithm 2] (S164). The beam coefficient calculation unit 33, when judging that the delay time absolute value is equal to or larger than the threshold value 2 (S162; No), calculates the beam coefficient by the [algorithm 3] (S165).

Given herein is an example where the [algorithm 1] corresponds to the (Formula 2), the [algorithm 2] corresponds to the (Formula 5), and the [algorithm 3] corresponds to the (Formula 6).

$$k(i) = c \times 1 / |\Delta t(i)|^3 \quad \cdots \text{ (Formula 6)}$$

Namely, the beam coefficient calculation unit 33 uses the inverse number of the delay time with respect to the path P1 (of which the delay time) judged, from the compared result by the threshold value comparing unit 121, to be smaller than the threshold value 1 (TD1). The beam coefficient calculation unit 33 uses the inverse number of the square of the delay time with respect to the path P2 judged to be smaller than the threshold value 2 (TD2) and to be equal to or larger than the threshold value 1 (TD1), and uses an inverse number of a cube of the delay time with respect to the path P3 judged to be equal to or larger than the threshold value 2 (TD2).

$$\text{Path P1: } k(1) = c \times 1 / |\Delta t(1)|$$

$$\text{Path P2: } k(2) = c \times 1 / |\Delta t(2)|^2$$

$$\text{Path P3: } k(3) = c \times 1 / |\Delta t(3)|^3$$

$$\text{Path P0 (the fast path): } 1$$

The downlink beam direction calculation unit 34 determines, based on the (Formula 3), the downlink beam direction from the respective beam coefficients.

$$\text{Downlink Beam Direction} = 1 / 4 \times \{(\theta(0) \times P(0) \times 1) + (\theta(1) \times P(1) \times k(1)) + (\theta(2) \times P(2) \times k(2)) + (\theta(3) \times P(3) \times k(3)\}$$

With this operation, the beam coefficients can be determined by more precise judgment than in the case of using one threshold value and, more essentially, a higher accurate weight can be applied when determining the beam direction.

Further, in the wireless communication systems in the fifth embodiment and in the modified examples thereof, the method of calculating the beam coefficient k(i) is determined from the delay information given from the fast path and from the predetermined threshold value, and the downlink beam direction is calculated by use of the beam coefficient k(i) acquired by the thus-determined method and the received signal power information P(i) and the arrival angle information θ (i) of each path.

As to this point, the method of calculating the beam coefficient k(i), which is exemplified in the second embodiment, may also be determined by the delay information from the maximum path and the predetermined threshold value.

Still further, the method of calculating the beam coefficient k(i), which is exemplified in the third embodiment, may also be determined by the delay information from the start timing for the path search and the predetermined threshold value.

Yet further, the downlink beam direction may also be calculated by use of only the beam coefficient k(i) obtained by the aforementioned calculation method and the arrival angle information θ(i).

[Sixth Embodiment]

The wireless communication system in a sixth embodiment of the present invention will hereinafter be described. The wireless communication system in the first embodiment explained earlier is that the beam coefficient k(i) is calculated by use of the delay information from the fast path, and the downlink beam direction is calculated by employing the beam coefficient k(i), and the received signal power information P(i) and the arrival angle information θ (i) of each path. In the wireless communication system in the sixth embodiment, the downlink beam direction is calculated by use of the beam coefficient k(i), the received signal power information P(i) and the arrival angle information θ (i) of each path and a rate coefficient in a way that changes a rate at which the received signal power information is multiplied by the beam coefficient (which will hereafter be termed the rate coefficient).

[System Architecture]

The wireless communication system in the sixth embodiment is configured by the same function units as those in the first embodiment (see FIG. 2). The downlink beam calculation unit 22, however, operates differently from in the first embodiment and is therefore explained as below. The explanations of the same other function units as those in the first embodiment are omitted. FIG. 17 is a block diagram showing a functional configuration of the downlink beam calculation unit in the sixth embodiment.

The downlink beam calculation unit 22 has an addition of an arrival angle average calculation unit 171, a standard deviation calculation unit 172 and a rate coefficient determining unit 173, other than the function units in the first embodiment. The functions of the subtracter 31, the absolute value calculation unit 32 and the beam coefficient calculation unit 33 within the downlink beam calculation unit 22 are respectively the same as those in the first embodiment, and hence their explanations are omitted.

The arrival angle average calculation unit 171 calculates an average value of pieces of DOA information of the respective paths, which are received from the SRC unit 21. The calculated average value is transferred to the standard deviation calculation unit 172.

The standard deviation calculation unit 172 obtains a standard deviation value from the average value of the arrival angles (refer to the Formula 7). In the following (Formula 7), "i" represents each path, and "n" represents a total number. The standard deviation calculation unit 172 transfers the obtained standard deviation value to the rate coefficient determining unit 173.

[Mathematical Expression 1]

$$\text{Standard Deviation} = \sqrt{\frac{\sum_{i=1}^{n}\left(\text{Arrival Angle}(i) - \text{Arrival Angle Average Value}\right)^2}{n}}$$

$$\cdots \text{ (Formula 7)}$$

The rate coefficient determining unit 173 acquires a rate coefficient "a" based on the received standard deviation value. The acquired rate coefficient "a" is transferred to the downlink beam direction calculation unit 34. The rate coefficient may also be acquired from a table retained on the memory etc., wherein the rate coefficient is associated with the standard deviation value. In this case, the rate coefficient determining unit 173 extracts the rate coefficient "a" from the table, wherein the standard deviation is used as a key.

The downlink beam direction calculation unit 34 calculates, based on the following (Formula 8), the downlink beam direction by use of the beam coefficient received from the beam coefficient calculation unit 33, the DOA information and the received signal power information each received from the SRC unit 21 and further the rate coefficient "a" received from the rate coefficient determining unit 173.

$$\text{Downlink Beam Direction} = 1 \ / \ N \times \Sigma(\theta(i) \times (1-a)P(i) \times a \times k(i)) \quad \cdots \text{(Formula 8)}$$

[Operational Example of Downlink Beam Calculation Unit]

An operational example of the downlink beam calculation unit in the sixth embodiment will hereinafter be described based on the example of the arrival angles shown in FIG. 1. Namely, this is the example of a case where the three receiving paths such as the path P0, the path P1 and the path P2 receive the arrivals at predetermined arrival angles (the path P0: -5 degrees, the path P1: 5 degrees, the path P2: 45 degrees) in the sequence of the path P0 -> the path P1 -> the path P2.
In this case, as in the first embodiment, the beam coefficients, which are shown in below, are transferred to the downlink beam direction calculation unit 34.

$$\text{Path P1: } k(1) = c \times 1 \ / \ |\Delta t(1)|$$

$$\text{Path P2: } k(2) = c \times 1 \ / \ |\Delta t(2)|$$

$$\text{Path P0 (the fast path): } k(0) = 1$$

On the other hand, the arrival angle average calculation unit 171 calculates, from the DOA information of the respective paths, P0, P1 and P2, the arrival angle average value given by ((-5 + 5 + 45)/3 = 15 degrees). Next, the standard deviation calculation unit 172 calculates, based on the (Formula 7), the standard deviation as shown below.

[Mathematical Expression 2]

$$\text{Standard Deviation} = \sqrt{\frac{(-5-15)^2 + (5-15)^2 + (45-15)^2}{3}} = \sqrt{\frac{400+100+900}{3}} = 21.6..$$

The rate coefficient determining unit 173 acquires the rate coefficient "a" based on the standard deviation value (21.6) from the memory etc..
The downlink beam direction calculation unit 34 determines the downlink beam direction from the respective beam coefficients, the rate coefficient "a", etc., based on the (Formula 8).

$$\text{Downlink Beam Direction}$$
$$= 1 \ / \ 3 \times \Sigma\{(\theta(i) \times (1-a)P(i) \times a \times k(i))$$
$$= 1 \ / \ 3 \times \{(\theta(0) \times (1-a)P(0) \times a) + (\theta(1) \times (1-a)P(1) \times a \times k(1)) + (\theta(2) \times (1-a)P(2) \times a \times k(2))\}$$

(Operation/Effect in Sixth Embodiment)

Herein, an operation and an effect of the wireless communication system in the sixth embodiment discussed above, will be described.

In this system, as in the first embodiment, the downlink beam calculation unit 22, based on the de-spreading timings, the DOA information and the received signal power levels about the respective paths, calculates the downlink beam direction.

In the downlink beam calculation unit 22, the beam coefficient is obtained from the delay time of each path. Herein, spread information of the arrival angle of the arrival signal is obtained by the arrival angle average calculation unit 171 and the standard deviation calculation unit 172. Then, the rate coefficient determining unit 173 obtains the rate coefficient corresponding to the influence degree of the received signal power level and the beam coefficient in terms of determining the beam direction from the thus-obtained arrival angle spread information. The beam direction is determined from the DOA information, the received signal power level and the beam coefficient by employing this rate coefficient.

Thus, in the sixth embodiment, the beam direction is determined by use of the rate coefficient corresponding to the influence degree of the received signal power level and the beam coefficient in terms of determining the beam direction on the basis of the arrival angle spread information of the arrival signal. Through this operation, the beam direction can be determined so that a delay information factor of each path increases if the arrival angle spread is large, and that a received signal power level factor of the path increases if the arrival angle spread is small. Namely, a beam direction determining process can be executed based on the more precise judgment and, more essentially, the communication quality with the mobile station can be improved.

(Modified Example of Sixth Embodiment)

In the wireless communication system in the sixth embodiment discussed above, the downlink beam direction is calculated as described above by using the beam coefficient k(i) calculated by employing the delay information from the fast path.

Concerning this point, the beam coefficient k(i) obtained from the delay information given from the maximum path as exemplified in the second embodiment may be used, and the beam coefficient k(i) obtained from the delay information from the start timing for the path search as exemplified in the third embodiment may also be employed.

[Modified Examples in First Embodiment through sixth Embodiment]

In the wireless communication system according to the present invention discussed above, the beam coefficient calculation unit 33 within the downlink beam calculation unit 22 calculates the beam coefficient from the predetermined delay time in each path, however, the memory etc. may retain a corresponding relationship between the delay time and the beam coefficient, and the beam coefficient may also be determined by employing these items of information. For instance, as shown in FIG. 18, the memory etc. may retain the corresponding relationship (B0 or B1) between the delay time and the beam coefficient.

In this case, the beam coefficient calculation unit 33 acquires the beam coefficient corresponding to the delay information from the memory on the basis of the delay information in each path.

Further, as B0 and B1 shown in FIG. 18 get off each other, the corresponding relationships between the delay time and the beam coefficient are separately retained, and the beam coefficient calculation unit 33 may acquire the beam coefficient in the proper corresponding relationship on the basis of the condition of the propagation environment.

[Concerning Constant c]

The constant "c" used in the (formula 2), (Formula 5) and (Formula 6) employs a predetermined value corresponding to, e.g., propagation environment information. The constant "c" may be retained beforehand on the memory etc. and may also be automatically calculated corresponding to the propagation environment information that will be shown below. The propagation environment information involves using the arrival angle spread information, the distribution information of the de-spreading timings of the paths, and so forth. The following is an elucidation of the relationship between the propagation environment information and the constant "c".

(Example of Relationship between Arrival Angle Spread Information and Constant c)

FIG. 19 shows a graph illustrating a relationship between the arrival angle spread information and the constant "c". The constant "c" may also be automatically calculated to gain values in this graph.

For example, if the arrival angle spread is large, the influence degrees of the paths excluding the fast path or the maximum path are set small, and hence the constant "c" is set to a value approximate to 0. Conversely, if the arrival angle spread is small, the influence degrees of the paths excluding the fast path or the maximum path are set large, and therefore the constant "c" may also be set to a value approximate to 1.

(Relationship between Distribution Information of De-spreading timings of Paths and Constant c)

In the case of using the distribution information of the de-spreading timings of the paths, the constant "c" may be determined depending on the spread of the distribution and time from the head of the search window of the fast path or the maximum path. FIG. 20 shows a graph illustrating an example of a relationship in this case between the distribution information of the de-spreading timings of the paths and the constant "c". FIG. 20 shows graphs G1 and G2. The graph G1 represents a relationship in a case exhibiting a short period of time ($\Delta t(0)$) from the start timing for the path search to the de-spreading timing of the maximum path or the fast path, and the graph G2 represents a relationship in a case exhibiting a long period of time ($\Delta t(0)$). Thus, the constant "c" may be determined by changing over the characteristic corresponding to the propagation environment information. Further, respective cases such as a distribution CASE1, a distribution CASE2 and a distribution CASE3 are plotted on the graph in FIG. 20.

In the case of the distribution CASE1, i.e., in the case where the de-spreading timings of the paths excluding the fast path or the maximum path exist in the vicinity of the de-spreading timing of the fast path or the maximum path (which is the case shown in FIG. 21), the constant "c" takes a value approximate to 1.0.

In the case of the distribution CASE2, i.e., in the case where the respective paths exist in wide spread (which is the case shown in FIG. 22), the constant "c" takes a small value. Moreover, in the case of the distribution CASE3, i.e., in the case where the de-spreading timings of the paths excluding the fast path or the maximum path exist in the vicinity of the de-spreading timing of the fast path or the maximum path, however, the fast path or the maximum path exists with a delay from the head of the search window (which is the case shown in FIG. 23), the constant "c" takes a small value.

**Claims**

1. A wireless communication device comprising:

   antennas receiving signals transmitted from a terminal respectively through a plurality of paths;
   a detection unit (21) detecting each of a received timing, arrival angle information and received signal power information of each of the received signals;
   a delay information calculation unit (35) obtaining delay information from the fastest received timing among the detected received timings or a start timing for a path search with respect to each of the signals;
   a weighted coefficient calculation unit (23) calculating a weighted coefficient with respect to each of the signals based on the delay information; and
   a determining unit (20) determining a direction of the signal transmitted toward the terminal by using the weighted coefficient as a weight to the arrival angle information in each of the signals.

2. A wireless communication device according to Claim 1, wherein the determining unit (20) determines the direction of the signal transmitted toward the terminal by using the weighted coefficient as a weight to the arrival angle information and to the received signal power information of each of the signals.

3. A wireless communication device according to Claim 1 or 2, wherein the weighted coefficient calculation unit (23) further includes a comparing unit comparing the delay information with a predetermined threshold value, and calculates the weighted coefficient based on a compared result by the comparing unit.

4. A wireless communication device according to Claim 2, further comprising:

   a spread calculation unit (171) obtaining arrival angle spread information based on the arrival angle information; and
   a rate acquiring unit (173) acquiring a rate coefficient between the received signal power information and the weighted coefficient based on the arrival angle spread information,
   wherein the determining unit (20) determines the direction of the signal transmitted toward the terminal by use of the received signal power information and the weighted coefficient according to the rate coefficient.

**5.** A wireless communication device comprising:

antennas receiving signals transmitted from a terminal respectively through a plurality of paths;
a detection unit (21) detecting each of a received timing, arrival angle information and received signal power information of each of the received signals;
a delay information calculation unit (35) obtaining delay information of each signal by use of, as a reference timing, a received timing of the signal having the maximum reception power among the detected received timings;
a weighted coefficient calculation unit (23) calculating a weighted coefficient with respect to each of the signals based on the delay information; and
a determining unit (20) determining a direction of the signal transmitted toward the terminal by using the weighted coefficient as a weight to the arrival angle information in each signal.

**6.** A wireless communication device according to any one of Claims 1 to 5, wherein the weighted coefficient calculation unit (23) calculates the weighted coefficient by an inverse number of the delay information.

**7.** A wireless communication method comprising:

a step of receiving signals transmitted from a terminal respectively through a plurality of paths;
a detecting step of detecting each of a received timing, arrival angle information and received signal power information of each of the received signals;
a delay information calculating step of obtaining delay information from the fastest received timing among the detected received timings or a start timing for a path search with respect to each of the signals;
a calculating step of calculating a weighted coefficient with respect to each of the signals based on the delay information; and
a determining step of determining a direction of the signal transmitted toward the terminal by using the weighted coefficient as a weight to the arrival angle information in each signal.

**8.** A wireless communication method according to Claim 7, wherein the determining step determines the direction of the signal transmitted toward the terminal by using the weighted coefficient as a weight to the arrival angle information and to the received signal power information of each signal.

**9.** A wireless communication method according to Claim 7 or 8, wherein the calculating step calculates the weighted coefficient based on a result comparing the delay information with a predetermined threshold value.

**10.** A wireless communication method according to Claim 8, further comprising the steps of:

obtaining arrival angle spread information based on the arrival angle information; and
acquiring a rate coefficient between the received signal power information and the weighted coefficient based on the arrival angle spread information,
wherein the determining step determines the direction of the signal transmitted toward the terminal by use of the received signal power information and the weighted coefficient according to the rate coefficient.

**11.** A wireless communication method comprising:

a step of receiving signals transmitted from a terminal respectively through a plurality of paths;
a detecting step of detecting each of a received timing, arrival angle information and received signal power information of each of the received signals;
a delay information calculating step of obtaining delay information of each signal by use of, as a reference timing, a received timing of the signal having the maximum received signal power among the detected reception timings;
a calculating step of calculating a weighted coefficient with respect to each of the signals based on the delay information; and
a determining step of determining a direction of the signal transmitted toward the terminal by using the weighted coefficient as a weight to the arrival angle information in each signal.

**Patentansprüche**

1.  Drahtlose Kommunikationsvorrichtung mit:

    Antennen, die Signale empfangen, die von einem Terminal jeweilig über eine Vielzahl von Wegen gesendet werden;
    einer Detektionseinheit (21), die jeweils eine Empfangszeitlage, Ankunftswinkelinformationen und Empfangssignalenergieinformationen von jedem der Empfangssignale detektiert;
    einer Verzögerungsinformationsberechnungseinheit (35), die Verzögerungsinformationen von der schnellsten Empfangszeitlage unter den detektierten Empfangszeitlagen oder einer Startzeitlage für eine Wegsuche bezüglich jedes der Signale erhält;
    einer Wichtungskoeffizientenberechnungseinheit (23), die einen Wichtungskoeffizienten bezüglich jedes der Signale auf der Basis der Verzögerungsinformationen berechnet; und
    einer Bestimmungseinheit (20), die eine Richtung des hin zu dem Terminal gesendeten Signals unter Verwendung des Wichtungskoeffizienten als Gewicht für die Ankunftswinkelinformationen in jedem der Signale bestimmt.

2.  Drahtlose Kommunikationsvorrichtung nach Anspruch 1, bei der die Bestimmungseinheit (20) die Richtung des hin zu dem Terminal gesendeten Signals unter Verwendung des Wichtungskoeffizienten als Gewicht für die Ankunftswinkelinformationen und für die Empfangssignalenergieinformationen jedes der Signale bestimmt.

3.  Drahtlose Kommunikationsvorrichtung nach Anspruch 1 oder 2, bei der die Wichtungskoeffizientenberechnungseinheit (23) ferner eine Vergleichseinheit enthält, die die Verzögerungsinformationen mit einem vorbestimmten Schwellenwert vergleicht und den Wichtungskoeffizienten auf der Basis eines Vergleichsresultats von der Vergleichseinheit berechnet.

4.  Drahtlose Kommunikationsvorrichtung nach Anspruch 2, ferner mit:

    einer Spreizberechnungseinheit (171), die Ankunftswinkelspreizinformationen auf der Basis der Ankunftswinkelinformationen erhält; und
    einer Ratenerfassungneinheit (173), die einen Ratenkoeffizienten zwischen den Empfangssignalenergieinformationen und dem Wichtungskoeffizienten auf der Basis der Ankunftswinkelspreizinformationen erfasst,
    bei der die Bestimmungseinheit (20) die Richtung des hin zu dem Terminal gesendeten Signals unter Verwendung der Empfangssignalenergieinformationen und des Wichtungskoeffizienten gemäß dem Ratenkoeffizienten bestimmt.

5.  Drahtlose Kommunikationsvorrichtung mit:

    Antennen, die Signale empfangen, die von einem Terminal jeweilig über eine Vielzahl von Wegen gesendet werden;
    einer Detektionseinheit (21), die jeweils eine Empfangszeitlage, Ankunftswinkelinformationen und Empfangssignalenergieinformationen von jedem der Empfangssignale detektiert;
    einer Verzögerungsinformationsberechnungseinheit (35), die Verzögerungsinformationen über jedes Signal unter Verwendung, als Referenzzeitlage, einer Empfangszeitlage des Signals mit der maximalen Empfangsenergie unter den detektierten Empfangszeitlagen erhält;
    einer Wichtungskoeffizientenberechnungseinheit (23), die einen Wichtungskoeffizienten bezüglich jedes der Signale auf der Basis der Verzögerungsinformationen berechnet; und
    einer Bestimmungseinheit (20), die eine Richtung des hin zu dem Terminal gesendeten Signals unter Verwendung des Wichtungskoeffizienten als Gewicht für die Ankunftswinkelinformationen in jedem Signal bestimmt.

6.  Drahtlose Kommunikationsvorrichtung nach einem der Ansprüche 1 bis 5, bei der die Wichtungskoeffizientenberechnungseinheit (23) den Wichtungskoeffizienten durch eine inverse Zahl der Verzögerungsinformationen berechnet.

7.  Drahtloses Kommunikationsverfahren mit:

    einem Schritt zum Empfangen von Signalen, die von einem Terminal jeweilig über eine Vielzahl von Wegen gesendet werden;

einem Detektionsschritt zum Detektieren jeweils einer Empfangzeitlage, von Ankunftswinkelinformationen und von Empfangssignalenergieinformationen von jedem der Empfangssignale;

einem Verzögerungsinformationsberechnungsschritt zum Erhalten von Verzögerungsinformationen von der schnellsten Empfangzeitlage unter den detektierten Empfangzeitlagen oder einer Startzeitlage für eine Wegsuche bezüglich jedes der Signale;

einem Berechnungsschritt zum Berechnen eines Wichtungskoeffizienten bezüglich jedes der Signale auf der Basis der Verzögerungsinformationen; und

einem Bestimmungsschritt zum Bestimmen einer Richtung des hin zu dem Terminal gesendeten Signals unter Verwendung des Wichtungskoeffizienten als Gewicht für die Ankunftswinkelinformationen in jedem Signal.

8. Drahtloses Kommunikationsverfahren nach Anspruch 7, bei dem der Bestimmungsschritt die Richtung des hin zu dem Terminal gesendeten Signals unter Verwendung des Wichtungskoeffizienten als Gewicht für die Ankunftswinkelinformationen und für die Empfangssignalenergieinformationen jedes Signals bestimmt.

9. Drahtloses Kommunikationsverfahren nach Anspruch 7 oder 8, bei dem der Berechnungsschritt den Wichtungskoeffizienten auf der Basis eines Resultats des Vergleichs der Verzögerungsinformationen mit einem vorbestimmten Schwellenwert berechnet.

10. Drahtloses Kommunikationsverfahren nach Anspruch 8, ferner miL den Schritten:

Erhalten von Ankunftswinkelspreizinformationen auf der Basis der Ankunftswinkelinformationen; und
Erfassen eines Ratenkoeffizienten zwischen den Empfangssignalenergieinformationen und dem Wichtungskoeffizienten auf der Basis der Ankunftswinkelspreizinformationen,
bei dem der Bestimmungsschritt die Richtung des hin zu dem Terminal gesendeten Signals unter Verwendung der Empfangssignalenergieinformationen und des Wichtungskoeffizienten gemäß dem Ratenkoeffizienten bestimmt.

11. Drahtloses Kommunikationsverfahren mit:

einem Schritt zum Empfangen von Signalen, die von einem Terminal jeweilig über eine Vielzahl von Wegen gesendet werden;
einem Detektionsschritt zum Detektieren jeweils einer Empfangzeitlage, von Ankunftswinkelinformationen und von Empfangssignalenergieinformationen von jedem der Empfangssignale;
einem Verzögerungsinformationsberechnungsschritt zum Erhalten von Verzögerungsinformationen jedes Signals unter Verwendung, als Referenzzeitlage, einer Empfangzeitlage des Signals mit der maximalen Emp-fangssignalenergie unter den detektierten Empfangzeitlagen;
einem Berechnungsschritt zum Berechnen eines Wichtungskoeffizienten bezüglich jedes der Signale auf der Basis der Verzögerungsinformationen; und
einem Bestimmungsschritt zum Bestimmen einer Richtung des hin zu dem Terminal gesendeten Signals unter Verwendung des Wichtungskoeffizienten als Gewicht für die Ankunftswinkelinformationen in jedem Signal.

## Revendications

1. Dispositif pour communication sans fil comprenant :

des antennes recevant des signaux émis par un terminal respectivement via une pluralité de trajectoires ;
une unité de détection (21) qui détecte un minutage reçu, des informations d'angle d'arrivée et des informations de puissance du signal reçu de chacun des signaux reçus ;
une unité de calcul d'informations de retard (35) qui obtient des informations de retard à partir du minutage le plus rapidement reçu parmi les minutages reçus détectés ou un minutage de départ pour la recherche d'une trajectoire relativement à chacun des signaux ;
une unité de calcul de coefficient pondéré (23) qui calcule un coefficient pondéré relativement à chacun des signaux sur la base des informations de retard ; et
une unité de détermination (20) qui détermine la direction du signal émis vers le terminal en utilisant le coefficient pondéré comme pondération sur les informations d'angle d'arrivée pour chacun des signaux.

2. Dispositif pour communication sans fil selon la revendication 1, dans lequel l'unité de détermination (20) détermine la direction du signal émis vers le terminal en utilisant le coefficient pondéré comme pondération sur les informations d'angle d'arrivée et sur les informations de puissance du signal reçu de chacun des signaux.

3. Dispositif pour communication sans fil selon la revendication 1 ou 2, dans lequel l'unité de calcul de coefficient pondéré (23) comprend en outre une unité de comparaison qui compare les informations de retard à une valeur de seuil prédéterminée, et calcule le coefficient pondéré sur la base d'un résultat comparé par l'unité de comparaison.

4. Dispositif pour communication sans fil selon la revendication 2, comprenant en outre :

   une unité de calcul d'étalement (171) qui obtient des informations sur l'étalement de l'angle d'arrivée sur la base des informations d'angle d'arrivée ; et
   une unité d'acquisition de vitesse (173) qui acquiert un coefficient de vitesse entre les informations de puissance du signal reçu et le coefficient pondéré sur la base des informations d'étalement de l'angle d'arrivée,
   dans lequel l'unité de détermination (20) détermine la direction du signal émis vers le terminal en utilisant les informations de puissance du signal reçu et le coefficient pondéré conformément au coefficient de vitesse.

5. Dispositif pour communication sans fil comprenant :

   des antennes recevant des signaux émis par un terminal respectivement via une pluralité de trajectoires ;
   une unité de détection (21) qui détecte un minutage reçu, des informations d'angle d'arrivée et des informations de puissance du signal reçu de chacun des signaux reçus ;
   une unité de calcul d'informations de retard (35) qui obtient des informations de retard de chaque signal en utilisant, comme minutage de référence, un minutage reçu du signal ayant la puissance maximale de réception parmi les minutages reçus détectés ;
   une unité de calcul de coefficient pondéré (23) qui calcule un coefficient pondéré relativement à chacun des signaux sur la base des informations de retard ; et
   une unité de détermination (20) qui détermine la direction du signal émis vers le terminal en utilisant le coefficient pondéré comme pondération sur les informations d'angle d'arrivée pour chaque signal.

6. Dispositif pour communication sans fil selon l'une quelconque des revendications 1 à 5, dans lequel l'unité de calcul de coefficient pondéré (23) calcule le coefficient pondéré par un nombre inverse des informations de retard.

7. Procédé pour communication sans fil comprenant :

   une étape de réception des signaux émis à partir d'un terminal respectivement via une pluralité de trajectoires ;
   une étape de détection consistant à détecter un minutage reçu, des informations d'angle d'arrivée et des informations de puissance du signal reçu de chacun des signaux reçus ;
   une étape de calcul d'informations de retard consistant à obtenir des informations de retard à partir du minutage le plus rapidement reçu parmi les minutages reçus détectés ou un minutage de départ pour rechercher une trajectoire relativement à chacun des signaux ;
   une étape de calcul consistant à calculer un coefficient pondéré relativement à chacun des signaux sur la base des informations de retard ; et
   une étape de détermination consistant à déterminer la direction du signal émis vers le terminal en utilisant le coefficient pondéré comme pondération sur les informations d'angle d'arrivée pour chaque signal.

8. Procédé pour communication sans fil selon la revendication 7, dans lequel l'étape de détermination détermine la direction du signal émis vers le terminal en utilisant le coefficient pondéré comme pondération sur les informations d'angle d'arrivée et sur les informations de puissance du signal reçu de chaque signal.

9. Procédé pour communication sans fil selon la revendication 7 ou 8, dans lequel l'étape de calcul calcule le coefficient pondéré sur la base d'un résultat comparant les informations de retard à une valeur de seuil prédéterminée.

10. Procédé pour communication sans fil selon la revendication 8, comprenant en outre les étapes consistant à :

   obtenir des informations d'étalement de l'angle d'arrivée sur la base des informations d'angle d'arrivée ; et
   acquérir un coefficient de vitesse entre les informations de puissance du signal reçu et le coefficient pondéré sur la base des informations d'étalement de l'angle d'arrivée,
   dans lequel l'étape de détermination détermine la direction du signal émis vers le terminal en utilisant les informations de puissance du signal reçu et le coefficient pondéré conformément au coefficient de vitesse.

11. Procédé pour communication sans fil comprenant :

une étape de réception des signaux émis à partir d'un terminal respectivement via une pluralité de trajectoires ;
une étape de détection consistant à détecter un minutage reçu, des informations d'angle d'arrivée et des informations de puissance du signal reçu de chacun des signaux reçus ;
une étape de calcul d'informations de retard consistant à obtenir des informations de retard de chaque signal en utilisant, comme minutage de référence, un minutage reçu du signal ayant la puissance maximale de réception parmi les minutages reçus détectés ;
une étape de calcul consistant à calculer un coefficient pondéré relativement à chacun des signaux sur la base des informations de retard ; et
une étape de détermination consistant à déterminer la direction du signal émis vers le terminal en utilisant le coefficient pondéré comme pondération sur les informations d'angle d'arrivée pour chaque signal.

## FIG. 1

DIRECTION OF MOBILE STATION
(0 deg)

BEAM DIRECTION

P0       P1

-5       +5

P2

+45

# FIG. 2

RECEIVED SIGNAL (ANTENNA 1)
RECEIVED SIGNAL (ANTENNA 2)
RECEIVED SIGNAL (ANTENNA 3)
RECEIVED SIGNAL (ANTENNA 0)

10 — MF
11 MF
MF
MF

DBF (U) — 12
SYNTHESIZING UNIT
SYNCHRONOUS DETECTION UNIT — 13
DECODING UNIT — 14 RECEIVED DATA (USER n)

SIR ESTIMATION UNIT — 15

16 WEIGHT (U) GENERATING UNIT

21 SRC DE-SPREADING TIMING
DOA INFORMATION
PATH INFORMATION

DOWNLINK BEAM CALCULATION UNIT — 22
BEAM DIRECTION
WEIGHT (D) GENERATING UNIT — 23

TRANSMITTING SIGNAL (ANTENNA 0) USER MULTIPLEXING (ANTENNA 0)
TRANSMITTING SIGNAL (ANTENNA 1) USER MULTIPLEXING (ANTENNA 1)
TRANSMITTING SIGNAL (ANTENNA 2) USER MULTIPLEXING (ANTENNA 2)
TRANSMITTING SIGNAL (ANTENNA 3) USER MULTIPLEXING (ANTENNA 3)

DBF (D) — 20

MODULATION UNIT — 19
TRANSMISSION POWER CONTROL UNIT — 18
CODING UNIT — 17
TRANSMITTING DATA (USER 1)

EP 1 746 741 B1

## FIG. 3

PATH
INFORMATION

- RECEIVED SIGNAL POWER LEVEL OF EACH PATH
- DOA INFORMATION OF EACH PATH
- DE-SPREADING TIMING OF FAST PATH
- DE-SPREADING TIMING OF EACH PATH

DOWNLINK BEAM CALCULATION UNIT — 22

DELAY INFORMATION CALCULATION UNIT

ABSOLUTE VALUE CALCULATION UNIT ($\Delta t(i)$)

BEAM COEFFICIENT CALCULATION UNIT

DOWNLINK BEAM DIRECTION CALCULATION UNIT

BEAM DIRECTION

31    32    35    33    34

EP 1 746 741 B1

# FIG. 4

RECEIVED SIGNAL
POWER INFORMATION

FAST
PATH

P0

P1

P2

ΔT(1)

ΔT(2)

TIME

## FIG. 5

PATH
INFORMATION

RECEIVED SIGNAL POWER
LEVEL OF EACH PATH

DOA INFORMATION
OF EACH PATH

DE-SPREADING TIMING
OF MAXIMUM PATH

DE-SPREADING TIMING
OF EACH PATH

DOWNLINK BEAM CALCULATION UNIT — 22

DELAY INFORMATION
CALCULATION UNIT

ABSOLUTE VALUE
CALCULATION UNIT
$(\Delta t(i))$

BEAM
COEFFICIENT
CALCULATION
UNIT

DOWNLINK BEAM
DIRECTION
CALCULATION
UNIT

BEAM
DIRECTION

— 31

— 32

— 33

— 34

— 35

EP 1 746 741 B1

# FIG. 6

RECEIVED SIGNAL
POWER INFORMATION

MAXIMUM PATH

P0

P1

P2

TIME

$\Delta T(0)$

$\Delta T(2)$

*FIG. 7*

PATH
INFORMATION

{ RECEIVED SIGNAL POWER
LEVEL OF EACH PATH

DOA INFORMATION
OF EACH PATH

START TIMING
FOR PATH SEARCH

DE-SPREADING TIMING
OF EACH PATH }

DOWNLINK BEAM CALCULATION UNIT

22

DOWNLINK BEAM
DIRECTION
CALCULATION
UNIT

BEAM
DIRECTION

DELAY INFORMATION
CALCULATION UNIT

ABSOLUTE VALUE
CALCULATION UNIT
$(\Delta t(i))$

BEAM
COEFFICIENT
CALCULATION
UNIT

31

32

33

34

35

EP 1 746 741 B1

# FIG. 8

RECEIVED SIGNAL
POWER INFORMATION

## FIG. 9

EP 1 746 741 B1

*FIG. 10*

EP 1 746 741 B1

## FIG. 11

PATH
INFORMATION

DOA INFORMATION
OF EACH PATH

START TIMING
FOR PATH SEARCH

DE-SPREADING TIMING
OF EACH PATH

DOWNLINK BEAM CALCULATION UNIT — 22

DELAY INFORMATION CALCULATION UNIT

ABSOLUTE VALUE CALCULATION UNIT ($\Delta t(i)$)

BEAM COEFFICIENT CALCULATION UNIT

DOWNLINK BEAM DIRECTION CALCULATION UNIT

BEAM DIRECTION

31    32    33    34    35

EP 1 746 741 B1

## FIG. 12

**DOWNLINK BEAM CALCULATION UNIT** — 22

RECEIVED SIGNAL POWER LEVEL OF EACH PATH

DOA INFORMATION OF EACH PATH

DE-SPREADING TIMING OF FAST PATH

DE-SPREADING TIMING OF EACH PATH

DELAY INFORMATION CALCULATION UNIT

ABSOLUTE VALUE CALCULATION UNIT ($\Delta t(i)$) — 32

THRESHOLD VALUE COMPARING UNIT — 121

BEAM COEFFICIENT CALCULATION UNIT — 33

DOWNLINK BEAM DIRECTION CALCULATION UNIT — 34

BEAM DIRECTION

31

35

EP 1 746 741 B1

# FIG. 13

# FIG. 14

```
                    ┌──────────────┐
                    │    START     │
                    └──────┬───────┘
                           │
S141 ─┐     ╱─────────────────────────────╲
      └─╱  DELAY TIME ABSOLUTE VALUE        ╲
       ╱              >                       ╲ ── NO ──┐
       ╲         THRESHOLD VALUE             ╱          │
        ╲─────────────┬───────────────────╱            │
                      │ YES                              │ S143
         ┌────────────┴──────────┐        ┌─────────────┴──────────┐
S142 ─── │      CALCULATE        │        │      CALCULATE         │
         │   BEAM COEFFICIENT    │        │   BEAM COEFFICIENT     │
         │    BY ALGORITHM 2     │        │    BY ALGORITHM 1      │
         └───────────┬───────────┘        └────────────┬──────────┘
                     │◄─────────────────────────────────
         ┌───────────┴───────────┐
S144 ─── │  OUTPUT TO DOWNLINK   │
         │    BEAM DIRECTION     │
         │   CALCULATION UNIT    │
         └───────────┬───────────┘
                     │
              ┌──────┴───────┐
              │     END      │
              └──────────────┘
```

# FIG. 15

RECEIVED SIGNAL
POWER INFORMATION

FAST
PATH

P0   P1   P2   P3

ΔT(1)

ΔT(2)

ΔT(3)

TIME

THRESHOLD VALUE 1
(TD1)

THRESHOLD VALUE 2
(TD2)

# FIG. 16

START

S161
THRESHOLD VALUE 1
>
DELAY TIME
ABSOLUTE VALUE

NO

S162
THRESHOLD VALUE 2
>
DELAY TIME
ABSOLUTE VALUE

NO

YES

YES

S163
CALCULATE
BEAM COEFFICIENT
BY ALGORITHM 1

S164
CALCULATE
BEAM COEFFICIENT
BY ALGORITHM 2

S165
CALCULATE
BEAM COEFFICIENT
BY ALGORITHM 3

S166
OUTPUT TO DOWNLINK
BEAM DIRECTION
CALCULATION UNIT

END

## FIG. 17

RECEIVED SIGNAL
POWER LEVEL
OF EACH PATH

DOA INFORMATION
OF EACH PATH

DE-SPREADING TIMING
OF FAST PATH

DE-SPREADING TIMING
OF EACH PATH

DOWNLINK BEAM CALCULATION UNIT — 22

**171** ARRIVAL ANGLE AVERAGE CALCULATION UNIT

**172** STANDARD DEVIATION CALCULATION UNIT

**173** RATE COEFFICIENT DETERMINING UNIT

DELAY INFORMATION CALCULATION UNIT

ABSOLUTE VALUE CALCULATION UNIT ($\Delta t(i)$)

BEAM COEFFICIENT CALCULATION UNIT

DOWNLINK BEAM DIRECTION CALCULATION UNIT

BEAM DIRECTION

31    32    33    34

35

EP 1 746 741 B1

# FIG. 18

BEAM
COEFFICIENT

1.0

B1

B0

DELAY TIME

# FIG. 19

CONSTANT c

1.0

0.0

SMALL

LARGE

ARRIVAL ANGLE SPREADING

# FIG. 20

# FIG. 21

RECEIVED SIGNAL
POWER INFORMATION

P0  P1  P2

TIME

$\Delta T(0)$

$\Delta T(1)$

$\Delta T(2)$

START TIMING
FOR PATH SEARCH

# FIG. 22

RECEIVED SIGNAL
POWER INFORMATION

START TIMING
FOR PATH SEARCH

# FIG. 23

RECEIVED SIGNAL
POWER INFORMATION

PO

P1

P2

TIME

ΔT(0)

ΔT(1)

ΔT(2)

START TIMING
FOR PATH SEARCH

# FIG. 24

# *FIG. 25*

# FIG. 26

DIRECTION OF MOBILE STATION (0 deg)

**REFERENCES CITED IN THE DESCRIPTION**

**Patent documents cited in the description**

- JP 2003 A
- JP 110476 A
- JP 2004 A
- JP 32656 A